# EUROPÄISCHE PATENTSCHRIFT

(11) **EP 4 728 728 B1**
(45) Veröffentlichungstag und Bekanntmachung des Hinweises auf die Patenterteilung: **29.07.2026**
(21) Anmeldenummer: 24721094.1
(22) Anmeldetag: 19.04.2024
(51) Int. Cl.: H04L 67/51, H04L 67/55

(54) **AUTOMATISIERUNGSSYSTEM MIT EINER KOMMUNIKATIONSINFRASTRUKTUR**
AUTOMATION SYSTEM WITH A COMMUNICATION INFRASTRUCTURE
SYSTÈME D'AUTOMATISATION DOTÉ D'UNE INFRASTRUCTURE DE COMMUNICATION

(30) Priorität: 27.07.2023 DE 102023119975
(43) Veröffentlichungstag der Anmeldung: 22.04.2026
(73) Patentinhaber: Beckhoff Automation GmbH, 33415 Verl (DE)
(72) Erfinder: FÖRDER, Torsten, 32657 Lemgo (DE); KERKHOFF, Daniel, 33415 Verl (DE); JANSSEN, Dirk, 33415 Verl (DE)
(74) Vertreter: Patentanwaltskanzlei WILHELM & BECK
(86) Internationale Anmeldenummer: PCT/EP2024/060728
(87) Internationale Veröffentlichungsnummer: WO 2025/021336

(56) Entgegenhaltungen:
- US-A1- 2011 258 268
- US-A1- 2023 036 132

## Beschreibung

Die Patentanmeldung beansprucht die Priorität der deutschen Patentanmeldung 10 2023 119 975.7.

Die Erfindung betrifft eine Kommunikationsinfrastruktur für eine Nachrichtenübermittlung zwischen Kommunikationsteilnehmern eines Automatisierungssystems.

Automatisierungssysteme umfassen in der Regel eine Vielzahl von Kommunikationsteilnehmern. Die Nachrichtenübermittlung zwischen den Kommunikationsteilnehmer kann dabei so ausgelegt sein, dass ein oder mehrere Kommunikationsteilnehmer einen oder mehrere Dienste für weitere Kommunikationsteilnehmer anbieten, wobei der Dienst des Kommunikationsteilnehmers durch den weiteren Kommunikationsteilnehmer über die Kommunikationsinfrastruktur des Automatisierungssystems genutzt wird.

Als Dienst kann der Kommunikationsteilnehmer eine Information regelmäßig, sporadisch oder jeweils bei Erfüllung bestimmter Bedingungen dem weiteren Kommunikationsteilnehmer zur Verfügung stellen. Alternativ kann die Information vom Kommunikationsteilnehmer auch auf Anforderung an den Dienst durch den weiteren Kommunikationsteilnehmer bereitgestellt werden.

Ein Dienst des Kommunikationsteilnehmers kann auch sein, dass der weitere Kommunikationsteilnehmer Aktionen von dem Kommunikationsteilnehmer anfordert. Die Aktionen werden dann vom Dienst des Kommunikationsteilnehmers ausgeführt und gegebenenfalls mit einer Ergebnisübermittlung an den weiteren Kommunikationsteilnehmer beantwortet. Aktionen können beispielsweise das Anlegen, das Lesen, das Verändern oder das Löschen von Variablen beziehungsweise von Variablenwerten sein. Aktionen können aber auch Befehle sein, die der Kommunikationsteilnehmer zur Steuerung des Automatisierungssystems ausführen soll, beispielsweise das Stoppen einer Bewegung oder das Erneuern einer Softwarekomponente innerhalb des Automatisierungssystems.

Dienste können als Information einfache Variablenwerte bereitstellen. Dienste können aber auch Darstellungen in Form von Objekten als Instanzen von bestimmten komplexen Typen oder Klassen sein. Die Instanziierung eines Objektes einer bestimmten Klasse entspricht dann dem Anlegen eines komplexen Variablenwertes. Im Unterschied zu den einfachen Variablenwerten können bei komplexen Variablenwerten auch Aktionen ausgeführt werden, die über das Anlegen, Lesen, Verändern oder Löschen hinausgehen. Solche Aktionen können dann mit Hilfe des Typs oder der Klasse der Objektinstanz beschrieben werden.

Dienste können auch Metainformation bereitstellen, die ähnlich wie einfache oder komplexe Variablenwerte als eine Information angefordert und gegebenenfalls auch mit Aktionen verknüpft sein können. Beispielsweise kann ein Dienst die Metainformation verfügbar machen, von welchem Typ oder welcher Klasse die Variablen des Dienstes sind beziehungsweise von welchem Typ oder welcher Klasse Variablen für den Dienst angelegt werden dürfen und welche Instanzen aktuell vorhanden sind. Ferner können auch Details zu den Typen oder Klassen als Information bereitgestellt werden.

Bei einer Topologie der Kommunikationsinfrastruktur im Automatisierungssystem, bei der die Nachrichtenübermittlung zwischen den Kommunikationsteilnehmern über direkt vernetzte Kommunikationsverbindungen erfolgt, wächst die Anzahl der Kommunikationsverbindungen quadratisch mit der Anzahl der Kommunikationsteilnehmer.

Wenn die Kommunikationsinfrastruktur im Automatisierungssystem dagegen einen Nachrichtenvermittler aufweist, über den die Kommunikationsteilnehmer zur Nachrichtenübermittlung verbunden sind, steigt die Anzahl der benötigten Kommunikationsverbindungen nur linear mit der Anzahl der Kommunikationsteilnehmer. Mit einem zwischengeschalteten Nachrichtenvermittler kann ferner der Konfigurationsaufwand verringert und auch die erforderlichen Ressourcen zum Aufbau und Betrieb der Kommunikationsverbindungen reduziert werden.

Aus dem Stand der Technik sind verschiedene Ansätze für Nachrichtenvermittlung mithilfe von zwischengeschalteten Nachrichtenvermittlern bekannt. Ein möglicher Ansatz ist der Standard "MQTT-Version 5.0" (https://docs.oasis-open.org/mqtt/mqtt/v5.0/mqtt-v5.0.html).

Im Standard "MQTT-Version 5.0" wird der Vorgang der Übermittlung von Nachrichten von den Kommunikationsteilnehmern an die Nachrichtenvermittler als Veröffentlichen (publishing) bezeichnet.

Die veröffentlichte Nachricht enthält einen Themennamen (topic name). Themennamen werden im Weiteren auch verkürzt als Themen oder einzeln als Thema bezeichnet. Der Themenname besteht in der Regel aus einer Sequenz von Themenelementen auf unterschiedlichen Themenebenen (topic level), die durch Ebenentrenner (topic level separator) separiert sind.

Die Themenebenen sind hierarchisch in einem Themenbaum (topic tree) organisiert, in dem jeder Themenebene eine beliebige Anzahl an weiteren Themenebenen untergeordnet sein kann. Mindestens eine Themenebene ist selbst keiner weiteren Themenebene untergeordnet. Themenebenen, die keiner weiteren Themenebene untergeordnet sind, werden als die Wurzeln des Themenbaumes bezeichnet.

Im Standard "MQTT-Version 5.0" teilen die Kommunikationsteilnehmer den Nachrichtenvermittlern mit, an welchen Themennamen der veröffentlichten Nachrichten die Kommunikationsteilnehmer interessiert sind. Dieser Vorgang wird als Abonnieren (subscribing) bezeichnet.

Kommunikationsteilnehmer können einzelne Themennamen abonnieren oder auch Teilbäume von Themenbäumen. Das Abonnieren von Teilbäumen geschieht mithilfe der Angabe eines Themenfilters. Ein Themenfilter ist ein Themenname, in dem einzelne und/ oder mehrere aufeinander folgende Themenebenen durch Platzhalter ersetzt sind.

Bei der Nachrichtenvermittlung basierend auf dem Publish-Subscribe-Prinzip muss der Kommunikationsteilnehmer nicht wissen, an welche weiteren Kommunikationsteilnehmern die Nachricht zu übermitteln ist. Diese Kenntnis ist in den Nachrichtenvermittler verlagert. Der Nachrichtenvermittler führt ein Verzeichnis, welcher Kommunikationsteilnehmer welche Themennamen beziehungsweise welcher Kommunikationsteilnehmer welche Themenfilter abonniert hat.

Die Weiterleitung einer Nachricht an mehrere interessierte Kommunikationsteilnehmer durch den Nachrichtenvermittler hat zur Folge, dass der veröffentlichende Kommunikationsteilnehmer die Nachricht in der Regel nur einmal zum Nachrichtenvermittler übertragen muss. Bei einem Automatisierungssystem mit direkt vernetzten Kommunikationsverbindungen muss dagegen die Nachricht vom veröffentlichenden Kommunikationsteilnehmer mehrfach versandt werden, wenn mehr als ein weiterer Kommunikationsteilnehmer die Nachricht erhalten soll.

Das Weiterleiten einer Nachricht durch den Nachrichtenvermittler sorgt ferner dafür, dass Informationen von Kommunikationsteilnehmern, die nur begrenzte Ressourcen besitzen, vielen weiteren Kommunikationsteilnehmern bereitgestellt werden können. Eine Temperaturmessung eines Sensors kann so beispielsweise auf verschiedenen Anzeigen gleichzeitig dargestellt werden. Umgekehrt kann der Nachrichtenvermittler einem Kommunikationsteilnehmer Informationen von vielen weiteren Kommunikationsteilnehmern zur Verfügung stellen. Auf einer Anzeige können dann beispielsweise die Temperaturmessungen von vielen verteilten angeordneten Sensoren gleichzeitig dargestellt werden.

Der Standard "MQTT-Version 5.0" beschreibt weiter, wie bei der Nachrichtenvermittlung basierend auf dem Publish-Subscribe-Prinzip eine Interaktion zwischen zwei Kommunikationsteilnehmern erfolgt. Eine Interaktion besteht aus einer Nachricht zur Anforderung (request) einer Aktion von einem weiteren Kommunikationsteilnehmer und gegebenenfalls einer Nachricht mit Information über die erfolgte Reaktion (response).

Gemäß dem Standard "MQTT-Version 5.0" veröffentlicht der Kommunikationsteilnehmer eine Anforderungsnachricht mit einer Aktionsanforderung mit Bezug auf einen Themennamen. Kommunikationsteilnehmer, die Nachrichten zu dem Themennamen beim Nachrichtenvermittler abonniert haben, reagieren dann auf die Anforderungsnachricht.

In der Anforderungsnachricht kann auch angegeben werden, auf welchem Themennamen die Antwort veröffentlicht werden soll, was im Standard als Antwortthema (response topic) bezeichnet wird. Das Antwortthema wird zusammen mit der Nachricht übertragen. In der Anforderungsnachricht kann weiter auch eine Korrelationsinformation (correlation data) enthalten sein.

Kommunikationsteilnehmer, die auf eine Anforderungsnachricht reagieren und eine Aktion ausführen, können eine Antwortnachricht beispielsweise mit einem Ergebnis als Reaktion unter einem Themennamen beim Nachrichtenvermittler veröffentlichen. Die Kommunikationsteilnehmer wiederholen dabei in der Antwortnachricht die Korrelationsinformation aus der Anforderungsnachricht. Die Korrelationsinformation ermöglicht es dem anfordernden Kommunikationsteilnehmer eine Antwortnachricht einer vorausgehenden Anforderungsnachricht zuzuordnen. Bevor ein Kommunikationsteilnehmer die Anforderungsnachricht veröffentlicht, abonniert der Kommunikationsteilnehmer die Antwortnachricht beim Nachrichtenvermittler.

In der EP3386171B1 ist ein Verfahren beschrieben, bei der nur die Kommunikationsteilnehmer, die eine Aktion per Anforderungsnachricht anfordern, direkt mit dem Nachrichtenvermittler verbunden sind. Die Kommunikationsteilnehmer, die eine Aktion ausführen und gegebenenfalls eine Antwortnachricht als Reaktion zurücksenden, sind dagegen über einen Adapter mit dem Nachrichtenvermittler verbunden.

Einer Anforderungsnachricht eines Kommunikationsteilnehmers als auch einer Antwortnachricht von einem Adapter liegt dabei dasselbe Protokoll zugrunde. Für die Interaktion zwischen dem Adapter und dem reagierenden Kommunikationsteilnehmer kann dagegen auch ein weiteres Protokoll verwenden werden. Der Adapter dient so als Übersetzer zwischen den Protokollen.

In der EP3386171B1 ist jedem Adapter eine eindeutige Adapteridentifikation zugeteilt, die von den Kommunikationsteilnehmern verwendet wird, um eine Anforderungsnachricht zu adressieren. Die Anforderungsnachricht zu einer Aktion enthält dann einen sogenannten Uniform Ressource Identifier (URI), der wiederum eine Adapteridentifikation und einen Variablennamen enthält. Anhand der Adapteridentifikation kann der Nachrichtenvermittler die Nachricht dem gewünschten Kommunikationsteilnehmer zustellen.

In der EP3386171B1 ist weiter beschreiben, dass auch ein Netzwerk von Nachrichtenvermittlern im Automatisierungssystem eingesetzt werden kann, um Nachrichten weiterzuleiten. Die Kommunikationsteilnehmer beziehungsweise die Adapter brauchen dabei jeweils nur an einen einzelnen Nachrichtenvermittler im Netzwerk angeschlossen zu sein, um an der Nachrichtenübermittlung teilzunehmen. Das Netzwerk der Nachrichtenvermittler ist so konfiguriert, dass die Adapteridentifikation aus den Anforderungsnachrichten ausreicht, um die Anforderungsnachrichten über das Netzwerk von Nachrichtenvermittlern dem gewünschten Adapter zuzustellen. Jeder Nachrichtenvermittler braucht dabei die Information, welche Adapter mit welchen Adapteridentifikationen an den Nachrichtenvermittler direkt oder indirekt über weitere Nachrichtenvermittler angeschlossen sind.

Aus der EP3523927B1 ist ein weiterer Ansatz für eine Nachrichtenvermittlung mit Hilfe eines zwischengeschalteten Nachrichtenvermittlers bekannt, bei dem vom Nachrichtenvermittler eine Verfügbarkeitsmeldung für einen Dienst erstellt wird, die das Thema, unter dem eine Anforderung des Dienstes erwartet wird, in Form eines Auftragsthemas benennt. Der Kommunikationsteilnehmer benötigt dann keine Konfiguration, wie Nachrichten an den Dienst adressieren werden müssen, sondern erhält die Information in Form des Auftragsthemas aus der Verfügbarkeitsmeldung vom Nachrichtenvermittler.

In der Spezifikation "Sparkplug 3.0.0" ist die Ausgestaltung eines Themenbaums in einem Nachrichtenvermittler erläutert, um einer Vielzahl von Kommunikationsteilnehmern zu ermöglichen, über den Nachrichtenvermittler gemeinsam zu interagieren. Die Kommunikationsteilnehmer legen für Interaktionen über den Nachrichtenvermittler fest, unter welchen Themen die Kommunikationsteilnehmer die Dienste anbieten, auf welchen Themen die Kommunikationsteilnehmer nach Anforderungsnachrichten horchen und unter welchen Themen die Kommunikationsteilnehmer dann Antwortnachrichten erwarten. In der Spezifikation "Sparkplug 3.0.0" werden auf den Themenebenen dabei Identitäten zur Adressierung von Kommunikationsteilnehmer eingesetzt.

In einem Netzwerk mit mehreren Nachrichtenvermittlern sind in der Regel Vermittlungsbrücken (bridges) implementiert, die mehrere Kommunikationsteilnehmer umfassen, die jeweils mit einem Nachrichtenvermittler aus dem Netzwerk verbunden sind. Die Vermittlungsbrücke kann eine Nachricht, die bei einem Nachrichtenvermittler publiziert wird, der mit einem Kommunikationsteilnehmer der Vermittlungsbrücke verbunden ist, bei weiteren Nachrichtenvermittlern als Nachrichtenkopie über die weiteren Kommunikationsteilnehmer der Vermittlungsbrücke veröffentlichen.

Die Vermittlungsbrücke kann dabei so ausgelegt sein, dass nur Nachrichten zu bestimmten Themen von einem Nachrichtenvermittler an weitere Nachrichtenvermittler weitergeleitet werden. Ferner kann die Vermittlungsbrücke das Thema der Nachrichtenkopie vor einer Weiterleitung auch abändern. Die Themaabänderung kann beispielsweise darauf Bezug nehmen, welcher Kommunikationsteilnehmer der Vermittlungsbrücke die Nachricht empfangen hat beziehungsweise an welche Kommunikationsteilnehmer die Vermittlungsbrücke die Nachrichtenkopie weiterleitet.

Bei der Verwendung von Vermittlungsbrücken können Nachrichtenkopien auch an weitere Nachrichtenvermittler weitergeleitet werden, obwohl keiner der mit den weiteren Nachrichtenvermittler verbundenen Kommunikationsteilnehmer das Thema der Nachricht abonniert hat, was unnötig Übertragungsbandbreite in Anspruch nimmt.

Weiterhin kann es zu ungewünschten Rückkopplungen kommen, wenn beispielsweise durch Vermittlungsbrücken topologisch ein Kreis von Kommunikationsverbindungen zwischen den Nachrichtenvermittlern geschlossen wird. Wenn der Nachrichtenvermittler dann wie im Standard "MQTT-Version 5.0" nicht darauf ausgelegt ist, Nachrichtenkopien als Kopie der ursprünglichen Nachricht zu erkennen, kann es zu einer Mehrfach-Auslieferung der Nachricht an einen Kommunikationsteilnehmer kommen.

Da die Vermittlungsbrücke auch als Kommunikationsteilnehmer agiert, kann die Vermittlungsbrücke auch eine Nachrichtenkopie, welche die Vermittlungsbrücke bereits weitergeleitet hat, nochmals weiterleiten. So können endlose Zyklen und unendliche Vervielfachungen von Nachrichten entstehen, was die Kommunikationsinfrastruktur überlasten und zu Störungen und Ausfällen führen kann. Die Probleme mit Vermittlungsbrücken treten vorzugsweise dann auf, wenn die Vermittlungsbrücken unterschiedlicher administrativer Kontrolle unterstehen.

Eine Vermittlungsbrücke kann auch ein integraler Bestandteil eines Nachrichtenvermittlers sein, wobei der Nachrichtenvermittler jeweils eine Kommunikationsverbindung mit den verschiedenen Kommunikationsteilnehmern hat und zusätzlich als Vermittlungsbrücke Kommunikationsteilnehmer umfasst, die wiederum über Kommunikationsverbindungen an weiteren Nachrichtenvermittlern angeschlossen sind.

Im Folgenden soll zur Vereinfachung angenommen werden, dass eine Vermittlungsbrücke zwischen zwei Nachrichtenvermittlern Nachrichten vermittelt. Die Erläuterungen zur einer Vermittlungsbrücke, die zwischen zwei Nachrichtenvermittlern Nachrichten vermittelt, gelten aber auch für eine Vermittlungsbrücke, die zwischen mehr als zwei Nachrichtenvermittlern Nachrichten vermittelt.

Die Kommunikationsinfrastruktur im Automatisierungssystem überschreitet heutzutage oft organisatorische Grenzen und kann der Kontrolle unterschiedlicher juristischer oder natürlicher Personen unterstehen. Damit die unterschiedlichen natürlichen oder juristischen Personen möglichst autonom handeln können, ist es für die Kommunikationsinfrastruktur besonders vorteilhaft, wenn die Veränderung in einem Teil der Kommunikationsinfrastruktur beziehungsweise bei einzelnen Kommunikationsteilnehmern so wenig wie möglich Änderungsbedarf bei den übrigen Teilen der Kommunikationsinfrastruktur beziehungsweise den weiteren Kommunikationsteilnehmern nach sich zieht.

Ein Automatisierungssystem mit den Merkmalen des Oberbegriffs des Anspruchs 1 ist aus der US2023/036132A1 bekannt. Weiterer Stand der Technik ist in der US2011/258268A1 beschrieben.

Es ist die Aufgabe der Erfindung, ein verbessertes Automatisierungssystem bereitzustellen, bei dem innerhalb einer auch komplexen Kommunikationsinfrastruktur des Automatisierungssystems eine beständige und effiziente Nachrichtenübermittlung ermöglicht wird, die einfach konfiguriert und gewartet sowie im Bedarfsfall mit wenig Aufwand verändert werden kann.

Die Aufgabe wird durch die unabhängigen Ansprüche gelöst. Bevorzugte Weiterbildungen sind in den abhängigen Ansprüchen angegeben.

Ein Automatisierungssystem weist eine Kommunikationsinfrastruktur auf, die mehrere Kommunikationsteilnehmer umfasst, die jeweils über eine Kommunikationsverbindung mit wenigstens einem Nachrichtenvermittler verbunden sind. Die Kommunikationsteilnehmer sind ausgelegt, beim Nachrichtenvermittler Nachrichten unter Themennamen zu veröffentlichen beziehungsweise Nachrichten unter Themennamen zu abonnieren, wobei die Kommunikationsteilnehmer beim Nachrichtenvermittler ein Abonnement auf Verfügbarkeitsmeldungen, die anzeigen, dass ein Kommunikationsteilnehmer einen Dienst bereitstellt, besitzen. Die Verfügbarkeitsmeldungen weisen jeweils erste Rückwegbeschreibungen auf, die bei der Übertragung zwischen den Kommunikationsteilnehmern über die Kommunikationsverbindungen zum Nachrichtenvermittler jeweils mit einer Wegabschnittsbezeichnung für den zurückgelegten Wegabschnitten erweitert wird. Eine Interaktion zwischen den Kommunikationsteilnehmern erfolgt, in dem wenigstens ein erster Kommunikationsteilnehmer, der Nachrichten unter einem ersten Themennamen beim Nachrichtenvermittler abonniert hat, eine Verfügbarkeitsmeldung unter dem ersten Themennamen beim Nachrichtenvermittler veröffentlicht, die anzeigt, dass der erste Kommunikationsteilnehmer einen dem ersten Themennamen zugeordneten Dienst bereitstellt, wobei jeder weitere Kommunikationsteilnehmer eine Nachrichtenkopie der Verfügbarkeitsmeldung mit einer ersten Rückwegbeschreibung, die die Wegabschnittsbezeichnungen für die zurückgelegten Wegabschnitte ausgehend vom ersten Kommunikationsteilnehmer umfasst, erhält, in dem wenigstens ein zweiter Kommunikationsteilnehmer eine Anforderungsnachricht für den Dienst unter dem ersten Themennamen beim Nachrichtenvermittler veröffentlicht, wobei der zweite Kommunikationsteilnehmer die erste Rückwegbeschreibung der Nachrichtenkopie der Verfügbarkeitsmeldung des Dienstes als den Zustellweg in der Anforderungsnachricht an den ersten Kommunikationsteilnehmer verwendet, wobei der Zustellweg der Anforderungsnachricht bei der Übertragung vom zweiten Kommunikationsteilnehmer zum ersten Kommunikationsteilnehmer über die Kommunikationsverbindungen zum Nachrichtenvermittler jeweils um die Wegabschnittsbezeichnung des zurückgelegten Wegabschnittes reduziert wird.

Der zweite Kommunikationsteilnehmer kann Nachrichten unter einem zweiten Themennamen beim Nachrichtenvermittler abonnieren. Die Anforderungsnachricht kann eine zweite Rückwegbeschreibung aufweisen, die bei der Übertragung vom zweiten Kommunikationsteilnehmer zum ersten Kommunikationsteilnehmer über die Kommunikationsverbindungen zum Nachrichtenvermittler jeweils mit der Wegabschnittsbezeichnung des zurückgelegten Wegabschnittes erweitert wird. Der erste Kommunikationsteilnehmer kann eine Antwortnachricht von dem Dienst auf die Anforderungsnachricht unter dem zweiten Themennamen beim Nachrichtenvermittler veröffentlichen, wobei der erste Kommunikationsteilnehmer die zweite Rückwegbeschreibung der Anforderungsnachricht als den Zustellweg in der Antwortnachricht an den zweiten Kommunikationsteilnehmer verwendet, wobei der Zustellweg der Antwortnachricht bei der Übertragung vom ersten Kommunikationsteilnehmer zum zweiten Kommunikationsteilnehmer über die Kommunikationsverbindungen zum Nachrichtenvermittler jeweils um die Wegabschnittsbezeichnung des zurückgelegten Wegabschnittes reduziert wird.

Die Verfügbarkeitsmeldung kann erste Metadaten und einen ersten Nachrichteninhalt aufweisen, wobei die ersten Metadaten den ersten Themennamen, die erste Rückwegbeschreibung und einmaligen Wert umfassen, und wobei der erste Nachrichteninhalt einen Diensttyp und optional eine Dienstversion umfasst.

Jeder Kommunikationsteilnehmer kann einen Teilnehmer-Nachrichtenvermittler umfassen, der über die zugeordnete Kommunikationsverbindung mit dem Nachrichtenvermittler verbunden ist, wobei jedem Teilnehmer-Nachrichtenvermittler eine Vermittlerbezeichnung zugeordnet, die den Teilnehmer-Nachrichtenvermittler eindeutig in Bezug auf die weiteren Teilnehmer-Nachrichtenvermittler kennzeichnet, die mit dem Nachrichtenvermittler verbunden sind.

Der Kommunikationsteilnehmer kann einen Dienst und/oder eine Applikation umfassen, die jeweils über eine Kommunikationsverbindung mit dem Teilnehmer-Nachrichtenvermittler des Kommunikationsteilnehmers verbunden sind, wobei der Dienst und/oder die Applikation ausgelegt sind, beim Teilnehmer-Nachrichtenvermittler des Kommunikationsteilnehmers Nachrichten unter Themennamen zu veröffentlichen beziehungsweise Nachrichten unter Themennamen zu abonnieren. Im Kommunikationsteilnehmer kann jedem Dienst eine Dienstbezeichnung und jeder Applikation eine Applikationsbezeichnung zugeordnet sein, die den Dienst beziehungsweise die Applikation im Kommunikationsteilnehmer eindeutig bezeichnen.

Die Kommunikationsverbindungen der Kommunikationsteilnehmer mit dem Nachrichtenvermittler können jeweils Vermittlungsbrücken sein, wobei jede Vermittlungsbrücke eine Brückenbezeichnung zugeordnet ist, die die Vermittlungsbrücke eindeutig in Bezug auf die weiteren Vermittlungsbrücken kennzeichnet, die mit dem Nachrichtenvermittler verbunden sind. Die Vermittlungsbrücken können Abonnements und Übersetzungstabellen besitzen, wobei die Vermittlungsbrücken ausgelegt sind, mithilfe der Abonnements Themennamen bei den mit den Vermittlungsbrücken verbundenen Teilnehmer-Nachrichtenvermittlern zu abonnieren, die von den Vermittlungsbrücken weitergeleitet werden sollen, und wobei die Vermittlungsbrücken ausgelegt sind, mithilfe der Übersetzungstabellen die Themennamen bei der Übermittlung zu verändern.

Der Nachrichtenvermittler kann einen Themenbaum besitzen, bei dem zwischen Themennamen unterschieden ist, die einen Zustellweg enthalten und solche, die keinen Zustellweg enthalten. Der Zustellweg kann dabei jeweils als Teil des Themenamens sein. Im Themenbaum können weiter Verfügbarkeitsmeldungen gekennzeichnet sein.

Das Automatisierungssystem kann sich über Organisations- und geografische Grenzen hinweg erstrecken, wobei die Teile des Automatisierungssystems autonom durch die jeweilige Organisation verändert werden können, ohne dass die Kenntnisnahme der Veränderung für weitere Kommunikationsteilnehmer oder Nachrichtenvermittler des Automatisierungssystems notwendig ist, um weiterhin Dienste aus dem veränderten Teil des Automatisierungssystems in Anspruch nehmen zu können beziehungsweise um weiterhin Dienste für den veränderten Teil des Automatisierungssystems anbieten zu können.

Im Automatisierungssystem erfahren die Kommunikationsteilnehmer ohne vorherige Konfiguration, welche von den Kommunikationsteilnehmern benötigte Dienste wie erreichbar sind oder wie eine Anforderungsnachricht übermittelt werden kann. Weder die Kommunikationsteilnehmer noch die Nachrichtenvermittler müssen wissen, welche Kommunikationsteilnehmer und Dienste an welcher Stelle der Kommunikationsinfrastruktur verfügbar sind, um Übertragungswege auswählen zu können.

Es ist nicht notwendig, innerhalb eines gemeinsamen Themenbaums der Kommunikationsinfrastruktur eindeutige Identitätsbezeichnungen zu verwenden, um Nachrichten korrekt zu adressieren. Die Vergabe von eindeutigen Identitätsbezeichnungen macht grundsätzlich eine zentrale Stelle notwendig, die als Registratur zur Verhinderung der doppelten Vergabe von Identitätsbezeichnungen dient. Die Notwendigkeit einer solchen zentralen Registratur würde die Autonomie von verschiedenen Organisationen verhindern, eigenständig Teile der Kommunikationsinfrastruktur, die unter ihrer Administration sind, zu verändern, beispielsweise um neue Kommunikationsteilnehmer und/ oder Nachrichtenvermittler zu integrieren.

Ferner haben topologische Kreise innerhalb der Kommunikationsinfrastruktur des Automatisierungssystems, wie sie beispielsweise bei Rückkopplungen mit Nachrichten-Vervielfältigungen entstehen, keine negativen Auswirkungen. Die redundanten Kommunikationsverbindungen tragen zur Stabilität und Verfügbarkeit der Kommunikationsinfrastruktur bei, indem Unterbrechungen einzelner Kommunikationsverbindungen durch Nutzung der gegebenenfalls vorhandenen redundanten Kommunikationsverbindung automatisch kompensiert werden können.

Die Erfindung wird anhand der beigefügten Figuren näher erläutert.
Figur 1 zeigt eine Nachricht im Rahmen einer Nachrichtenvermittlung basierend auf dem Publish-Subscribe-Prinzip.
Figur 2 zeigt einen Themenbaum.

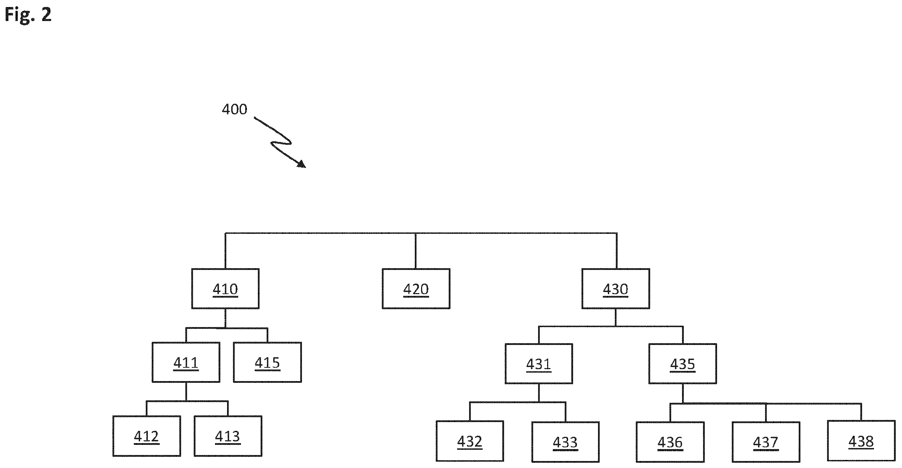

Figur 2 zeigt Nachrichten für eine Interaktion zwischen Kommunikationsteilnehmern.

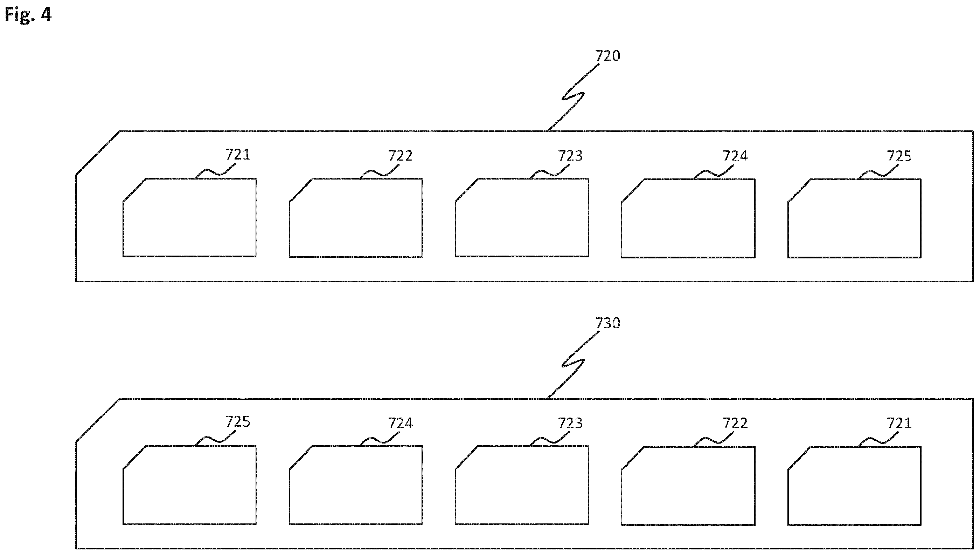

Figur 4 zeigt Rückwegbeschreibungen.

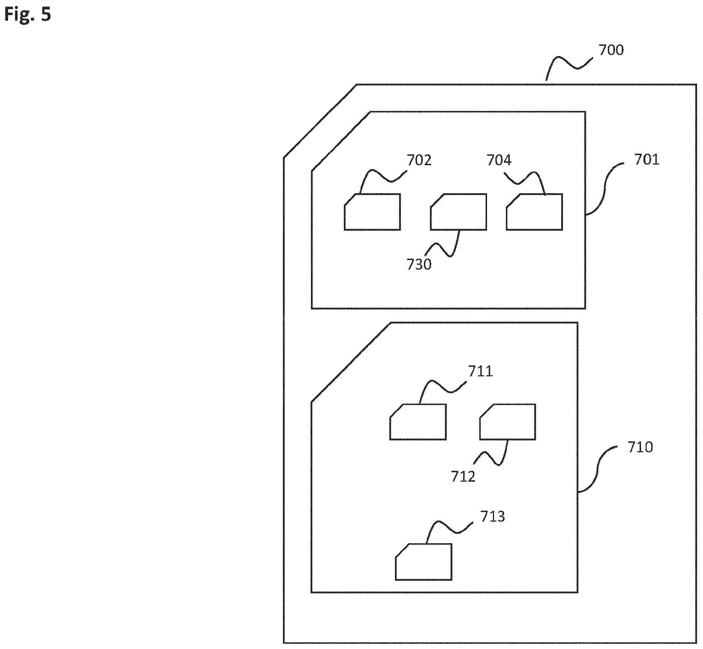

Figur 5 zeigt eine Verfügbarkeitsmeldung.

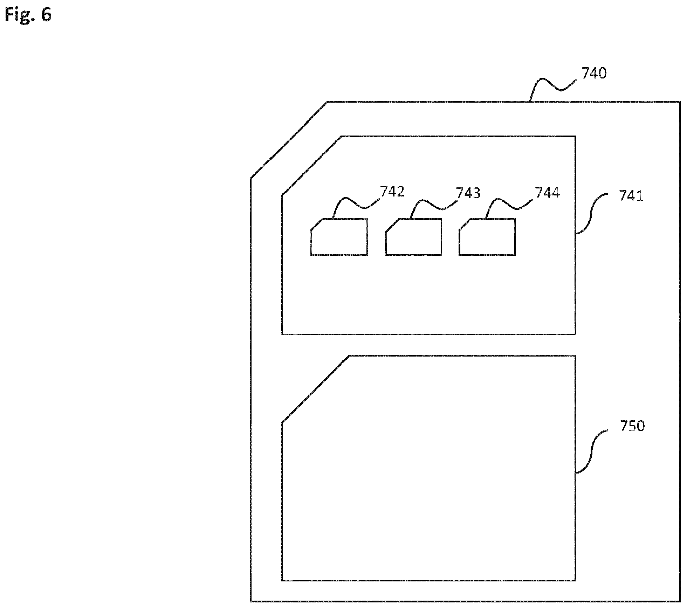

Figur 6 zeigt eine Anforderungsnachricht.

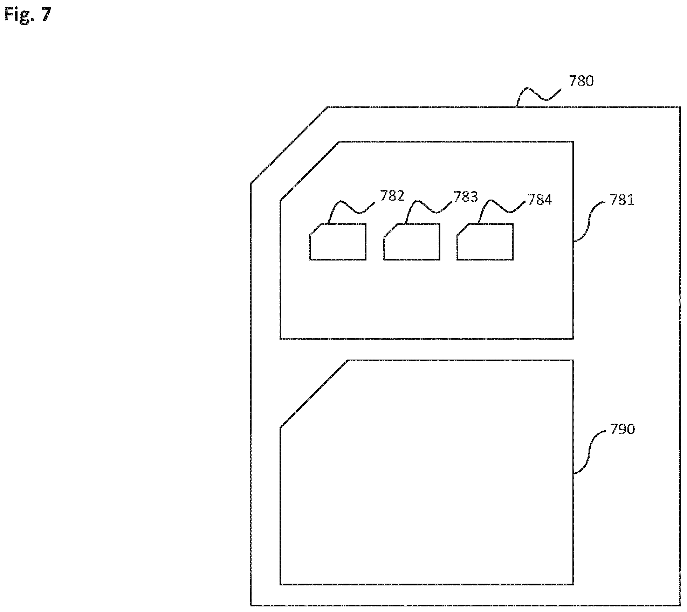

Figur 7 zeigt eine Antwortnachricht.

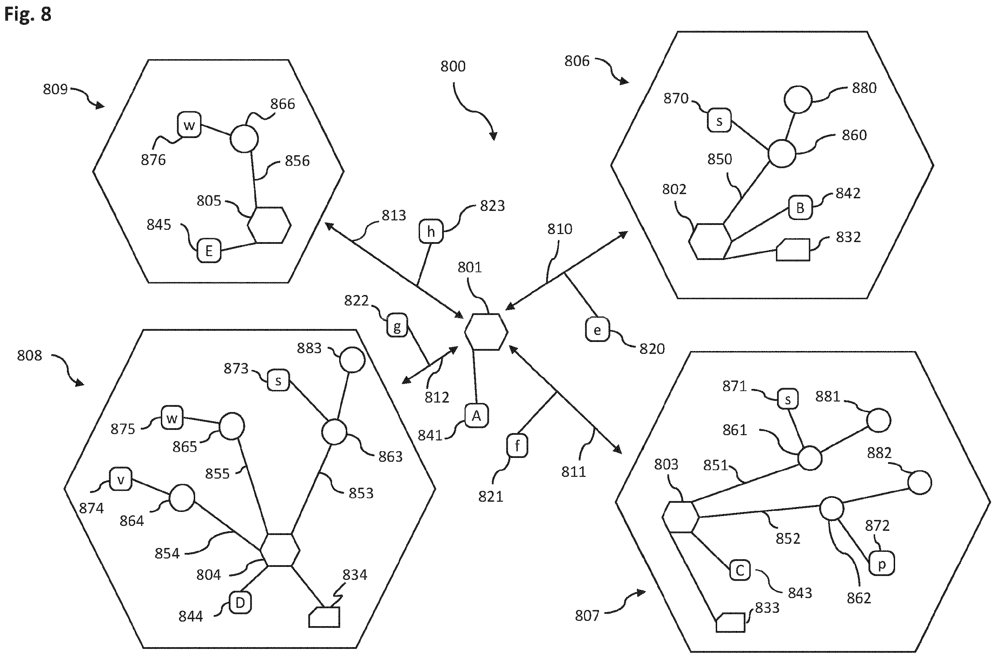

Figur 8 zeigt den Aufbau eines Automatisierungssystems mit Kommunikationsteilnehmern und einem Nachrichtenvermittler.

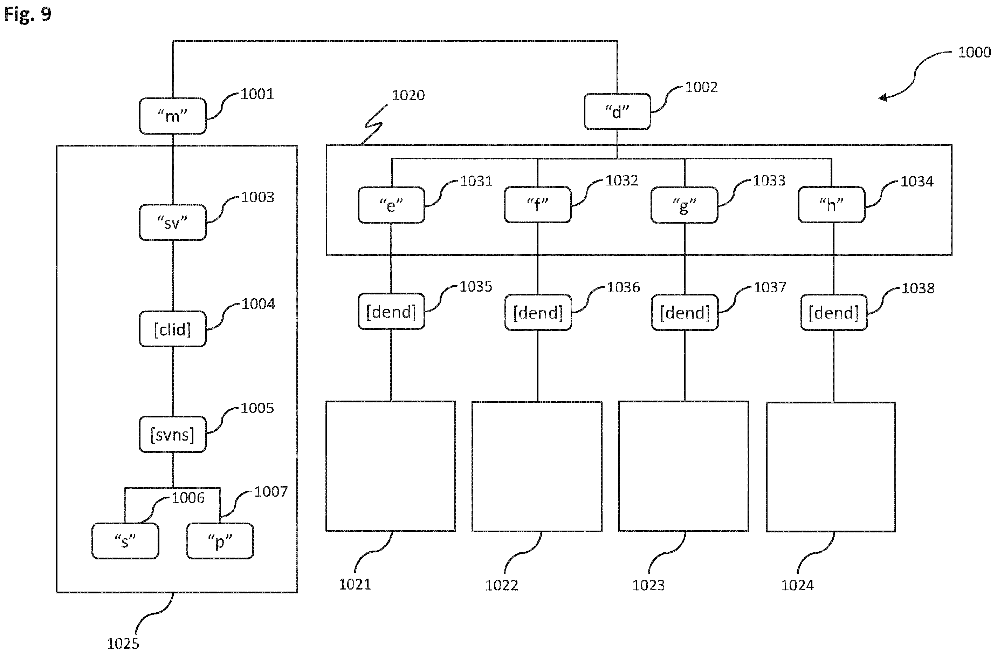

Figur 9 zeigt einen Themenbaum aus Sicht des Nachrichtenvermittlers im Automatisierungssystem aus Figur 8.

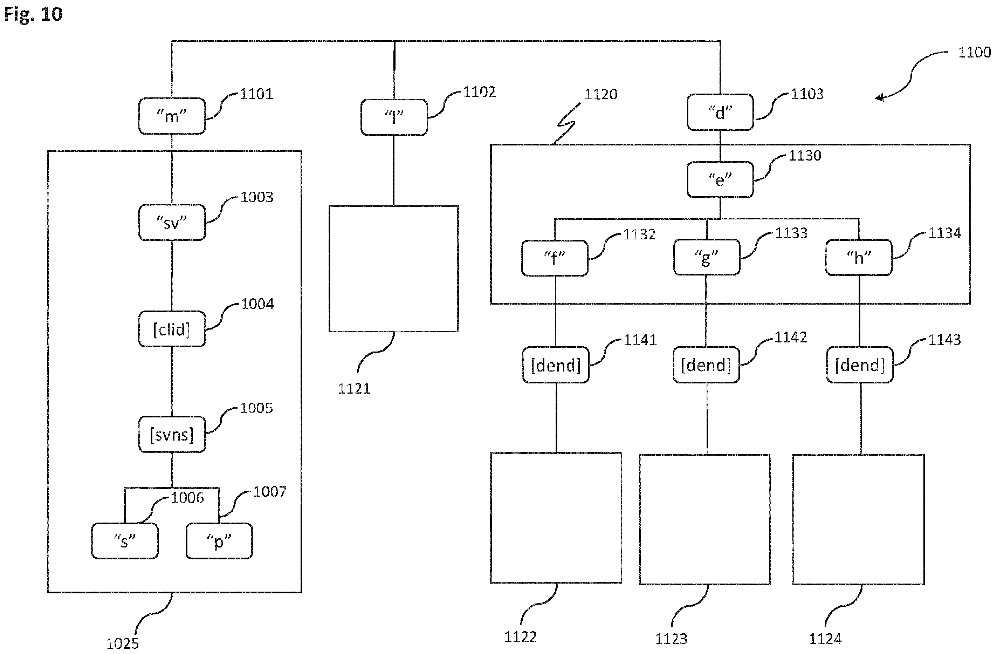

Figur 10 zeigt einen Themenbaum aus Sicht eines Teilnehmer-Nachrichtenvermittlers in einem Kommunikationsteilnehmer des Automatisierungssystems aus Figur 8.

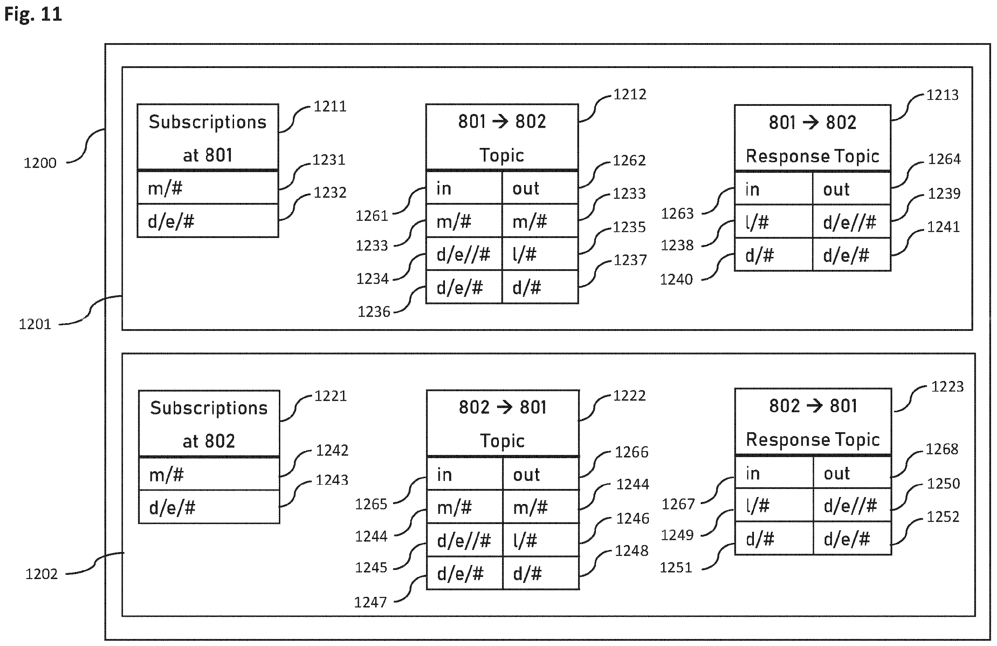

Figur 11 zeigt Abonnementlisten und Übersetzungstabellen für eine Vermittlungsbrücke im Automatisierungssystem aus Figur 8.

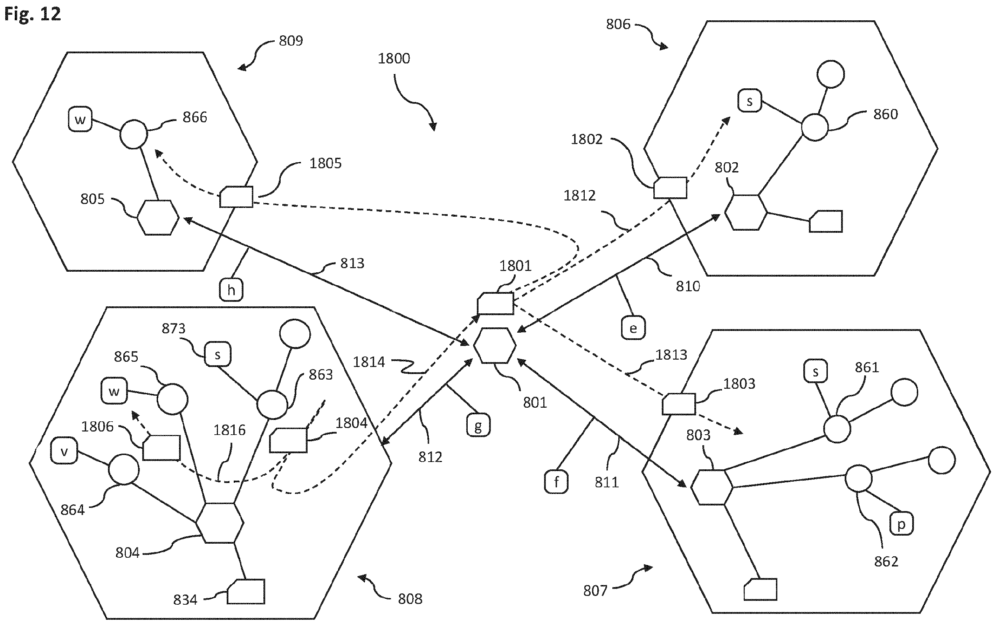

Figur 12 zeigt im Automatisierungssystem aus Figur 8 den Vorgang, wenn ein Dienst eines Kommunikationsteilnehmers eine Verfügbarkeitsmeldung publiziert.

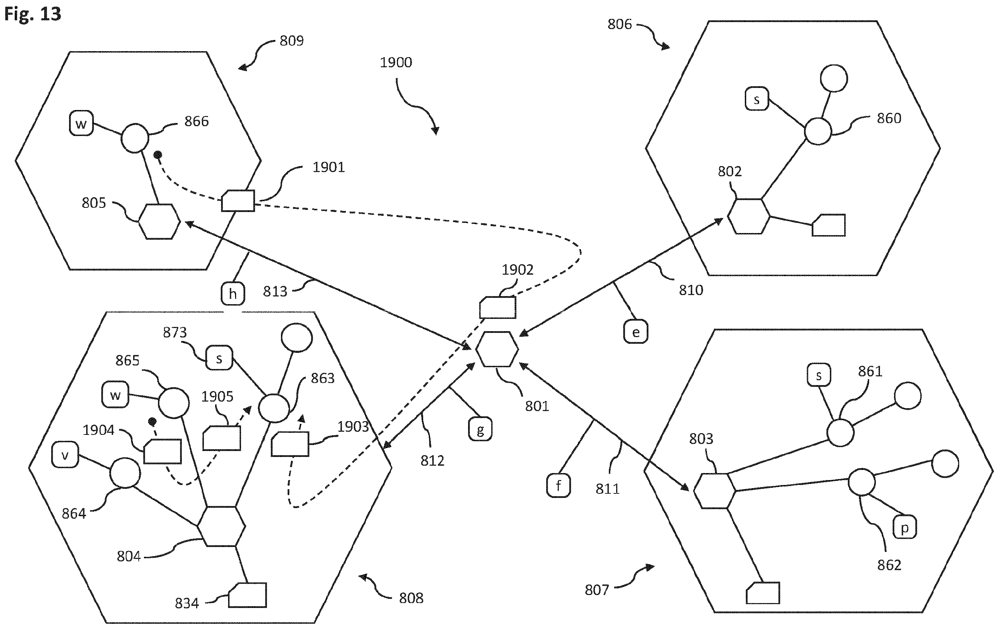

Figur 13 zeigt im Automatisierungssystem aus Figur 8 den Vorgang, beim dem Applikationen in Kommunikationsteilnehmern Anforderungsnachrichten publizieren.

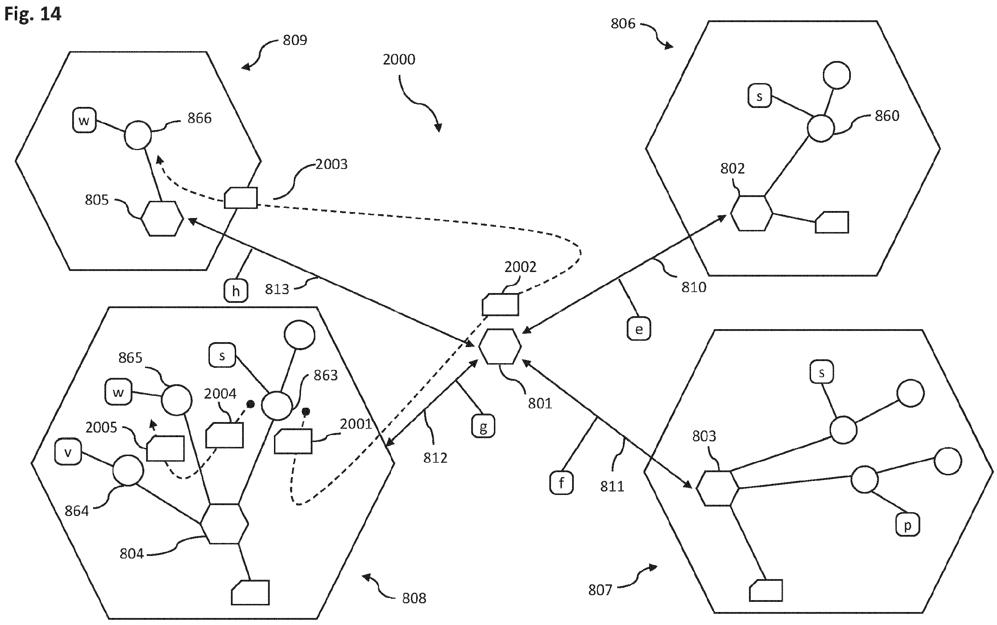

Figur 14 zeigt im Automatisierungssystem aus Figur 8 den Vorgang, beim ein Dienst im Kommunikationsteilnehmer Antwortnachrichten in Reaktion auf die Anforderungsnachrichten publiziert.

In einem Automatisierungssystem mit einer Kommunikationsinfrastruktur, die einen oder mehrere Nachrichtenvermittler aufweist, erfolgt eine Nachrichtenübermittlung basierend auf dem Publish-Subscribe-Prinzip. Kommunikationsteilnehmer veröffentlichen (publishing) beziehungsweise abonnieren (subscribing) Nachrichten beim Nachrichtenvermittler.

Eine Nachricht enthält einen Themennamen (topic name), im Weiteren auch verkürzt als Themen oder einzeln als Thema bezeichnet, der in der Regel aus einem einzelnen Themenelement oder einer Sequenz von Themenelementen aus unterschiedlichen Themenebenen (topic level), die durch Ebenentrenner (topic level separator) separiert sind, besteht.

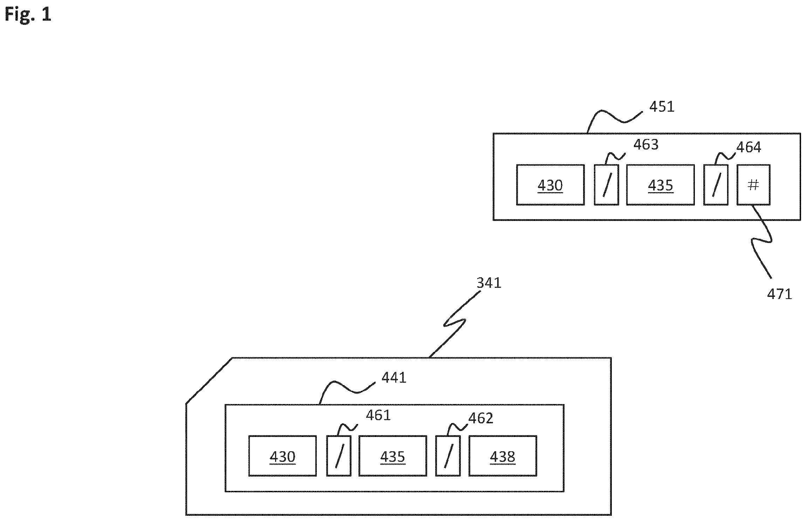

Ein beispielhafter Aufbau einer Nachricht 341, die vom einem Kommunikationsteilnehmer bei einem Nachrichtenvermittler veröffentlicht wird, ist in Figur 1 gezeigt. Die Nachricht 341 besitzt einen Themennamen 441, der das erste Themenelement 430, zweite Themenelement 435 und dritte Themenelement 438 mit zwischengeordneten ersten Ebenentrenner 461 und zweiten Ebenentrenner 462 umfasst.

Die Themenebenen der Themenelemente sind hierarchisch in einem Themenbaum (topic tree) organisiert, wobei jeder Themenebene eine beliebige Anzahl an weiteren Themenebenen untergeordnet sein kann. Themenebenen, die keiner weiteren Themenebene untergeordnet sind, bilden die Wurzeln des Themenbaumes.

Ein beispielhafter Aufbau eines Themenbaums 400 ist in Figur 2 gezeigt, wobei in der Darstellung der Themenbaum 400 von oben nach unten wächst. Der Themenbaum 400 enthält als Wurzeln drei Themenelemente in einer Themenebene, die das erste Themenelement 430 des Themennamens 441 der Nachricht 341 sowie ein viertes Themenelement 410 und ein fünftes Themenelement 420 beinhaltet.

Die nächste Themenebene umfasst vier Themenelemente, die das zweite Themenelement 435 des Themennamens 441, das hierarchisch dem ersten Themenelement 430 des Themennamens 441 untergeordnet ist, sowie ein sechstes Themenelement 411 und ein siebtes Themenelement 415, die hierarchisch dem vierten Themenelement 410 untergeordnet sind, und ein achtes Themenelement 431, das hierarchisch dem ersten Themenelement 430 untergeordnet ist, sind.

Die nachfolgende Themenebene weist sieben Themenelemente auf, die das dritte Themenelement 438 des Themennamens 441, das hierarchisch dem zweiten Themenelement 435 des Themennamens 441 untergeordnet ist, sowie ein neuntes Themenelement 412 und ein zehntes Themenelement 413, die hierarchisch dem sechsten Themenelement 411 untergeordnet sind, ein elftes Themenelement 432 und ein zwölftes Themenelement 433, die hierarchisch dem achten Themenelement 431 untergeordnet sind, und ein dreizehntes Themenelement 436 und ein vierzehntes Themenelement 437, die hierarchisch dem zweiten Themenelement 435 untergeordnet sind, umfassen.

Die Kommunikationsteilnehmer können einzelne Themennamen abonnieren oder auch Teilbäume des Themenbaums. Das Abonnieren von Teilbäumen geschieht mithilfe der Angabe eines Themenfilters. Ein Themenfilter ist ein Themenname, in dem einzelne und/ oder mehrere aufeinander folgende Themenebenen durch Platzhalter ersetzt sind.

Ein beispielhafter Aufbau eines Themenfilters 451 ist weiter in Figur 1 gezeigt. Der Themenfilter 451 umfasst das erste Themenelement 430 und das zweite Themenelement 435 mit einem zwischengeordneten dritten Ebenentrenner 463. Nach dem zweiten Themenelement 435 ist ein vierter Ebenentrenner 464 angeordnet, an den sich ein Platzhalter 471 anschließt. Der Platzhalter 471 deckt so das dreizehnte Themenelement 436, das vierzehnte Themenelement 437 und das dritte Themenelement 438, die hierarchisch dem zweiten Themenelement 435 untergeordnet sind, ab.

Bei der Nachrichtenvermittlung basierend auf dem Publish-Subscribe-Prinzip erfolgt eine Interaktion zwischen den Kommunikationsteilnehmern, in dem Kommunikationsteilnehmer Anforderungsnachrichten veröffentlichen und gegebenenfalls Antwortnachrichten erhalten.

Von einem Kommunikationsteilnehmer wird eine Anforderungsnachricht für eine Aktion auf einen Themennamen 441 beim Nachrichtenvermittler veröffentlicht. Kommunikationsteilnehmer, die Nachrichten zu dem Themennamen 441 beim Nachrichtenvermittler abonniert haben, reagieren dann auf die Anforderungsnachricht. In der Anforderungsnachricht kann auch angegeben werden, auf welchem Themennamen 441 die Antwort veröffentlicht werden soll, was im Weiteren als Antwortthema (response topic) bezeichnet wird. Das Antwortthema wird dabei zusammen mit der Anforderungsnachricht übertragen. In der Anforderungsnachricht kann weiter eine Korrelationsinformation (correlation data) angegeben werden.

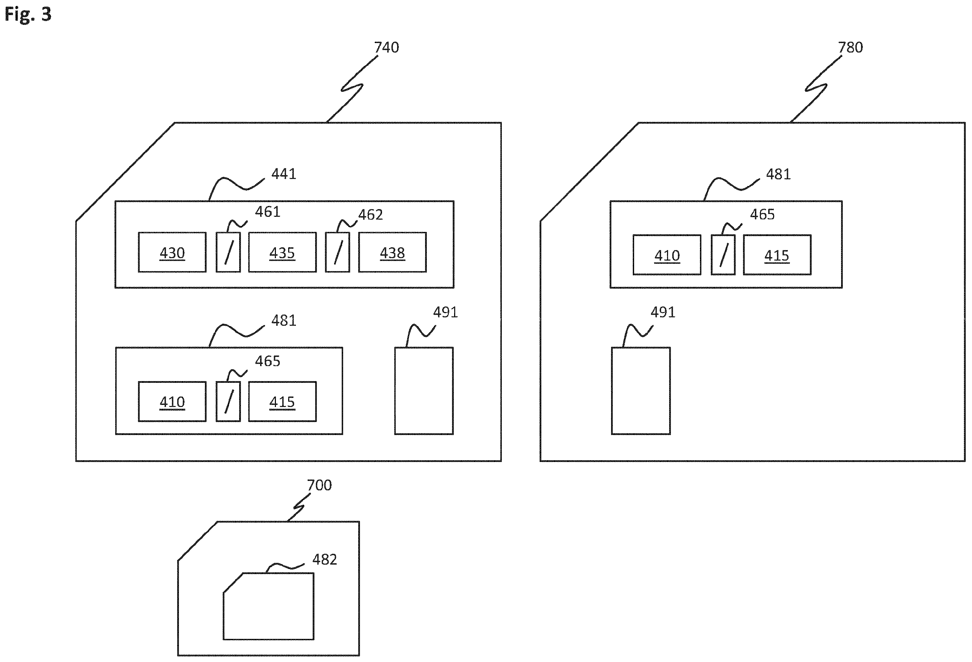

In Figur 3 ist ein Beispiel für die Nachrichten einer Interaktion zwischen Kommunikationsteilnehmern im Automatisierungssystem gezeigt. Ein Kommunikationsteilnehmer veröffentlicht beim Nachrichtenvermittler eine Anforderungsnachricht 740 auf den Themennamen 441, der bereits in Fig. 1 gezeigt ist und das erste Themenelement 430, zweite Themenelement 435 und dritte Themenelement 438 mit dem zwischen geordneten ersten Ebenentrenner 461 und zweiten Ebenentrenner 462 umfasst. Die Anforderungsnachricht 740 enthält weiter ein Antwortthema 481, dass das vierte Themenelement 410 und das siebte Themenelement 415 mit einem zwischengeordneten fünften Ebenentrenner 465 umfasst. Weiter weist die Anforderungsnachricht 740 die Korrelationsinformation 491 auf.

Kommunikationsteilnehmer, die auf eine Anforderungsnachricht reagieren und eine Aktion ausführen, können eine Antwortnachricht beispielsweise mit einem Ergebnis als Reaktion unter einem Themennamen beim Nachrichtenvermittler veröffentlichen. Die Kommunikationsteilnehmer wiederholen dabei in der Antwortnachricht die Korrelationsinformation aus der Anforderungsnachricht. Die Korrelationsinformation ermöglicht es, dem anfordernden Kommunikationsteilnehmer eine Antwortnachricht einer vorausgehenden Anforderungsnachricht zuzuordnen. Bevor ein Kommunikationsteilnehmer die Anforderungsnachricht veröffentlicht, abonniert der Kommunikationsteilnehmer das Thema der Antwortnachricht beim Nachrichtenvermittler.

In Figur 3 ist gezeigt, eine Antwortnachricht 780 mit dem Antwortthema 481, die im Rahmen der Interaktion von einem reagierenden Kommunikationsteilnehmer beim Nachrichtenvermittler veröffentlicht wird. Die Antwortnachricht 780 enthält außerdem die Korrelationsinformation 491.

Kommunikationsteilnehmer zeigen ferner mit einer Nachricht zu einem Thema an, dass ein Dienst bereitgestellt und Anforderungsnachrichten bezüglich des Dienstes erwartet werden. Eine solche Nachricht wird im Weiteren als Verfügbarkeitsmeldung des Dienstes bezeichnet. Die Benennung des Themennamen, unter dem eine Anforderung des Dienstes erwartet wird, wird als Auftragsthema bezeichnet.

In Figur 3 ist eine Verfügbarkeitsmeldung 700 mit einem Auftragsthema 482 dargestellt. Die Verfügbarkeitsmeldungen werden dabei von den Nachrichtenvermittlern über die Kommunikationsinfrastruktur an interessierte Kommunikationsteilnehmer verschickt.

Bei einem Automatisierungssystem mit einem Netzwerk von Nachrichtenvermittlern erfolgt die Zustellung von Nachrichten anhand von Wegbeschreibungen. Eine einer Nachricht zugeordnete Wegbeschreibung benennt, über welche Nachrichtenvermittler und/ oder welche Kommunikationsverbindungen zwischen den Nachrichtenvermittlern die Nachricht weitergeleitet werden soll.

Für die Bestimmung der Wegbeschreibung werden dabei die Verfügbarkeitsmeldungen 700 genutzt. Die Verfügbarkeitsmeldung 700 enthält dann zusätzlich ein Feld, das als Rückwegbeschreibung bezeichnet wird und den Übermittlungsweg zurück zum Dienst beschreibt.

Vor dem Absenden der Verfügbarkeitsmeldung 700 durch den Dienst enthält die Rückwegbeschreibung keinen Wert. Die Rückwegbeschreibung wird bei der Übertragung zum jeweils nächsten Nachrichtenvermittler oder einem Kommunikationsteilnehmer um jeweils die Bezeichnung des während der Übertragung zurückgelegten Wegabschnittes, die im Weiteren als Wegabschnittsbezeichnung bezeichnet wird, erweitert. Die Erweiterung der Rückwegbeschreibung kann dabei vor, während oder nach der Übertragung zum jeweils nächsten Nachrichtenvermittler oder einem Kommunikationsteilnehmer ausgeführt werden.

Die Wegabschnittsbezeichnung kann jeweils hinten an den aktuellen Wert der Rückwegbeschreibung angehängt werden. Alternativ kann die Wegabschnittsbezeichnung auch jeweils an den Anfang des Wertes der Rückwegbeschreibung gesetzt werden. Figur 4 zeigt die beiden Alternativen an Beispielen.

Eine erste Rückwegbeschreibung 720 weist erste bis fünfte Wegabschnittsbezeichnungen 721-725 auf, wobei die Reihenfolge erste Wegabschnittsbezeichnung 721, zweite Wegabschnittsbezeichnung 722, dritte Wegabschnittsbezeichnung 723, vierte Wegabschnittsbezeichnung 724 und fünfte Wegabschnittsbezeichnung 751 ist.

Eine zweite Rückwegbeschreibung 730 weist wiederum die erste bis fünfte Wegabschnittsbezeichnungen 721-725 auf, wobei die Reihenfolge fünfte Wegabschnittsbezeichnung 725, vierte Wegabschnittsbezeichnung 724, dritte Wegabschnittsbezeichnung 723, zweite Wegabschnittsbezeichnung 722 und erste Wegabschnittsbezeichnung 721 ist.

In beiden Ausführungsformen sind die Wegabschnittsbezeichnungen in der Rückwegbeschreibung geordnet und so voneinander getrennt, dass aus der Rückwegbeschreibung die einzelnen Wegabschnittsbezeichnungen eindeutig bestimmt werden können.

Die Verfügbarkeitsmeldung 700 kann durch das Netzwerk von Nachrichtenvermittlern gegebenenfalls an mehrere Kommunikationsteilnehmer zugestellt werden, wenn mehrere Kommunikationsteilnehmer an der Verfügbarkeit des Dienstes interessiert sind. Die Verteilung der Verfügbarkeitsmeldung 700 auf mehrere Kommunikationsteilnehmer kann automatisch erfolgen, wenn die Kommunikationsteilnehmer das Thema der Verfügbarkeitsmeldung 700 vorher beim Nachrichtenvermittler abonniert haben. Verschiedene Dienste können dabei dasselbe Thema oder verschiedene Themen für die Verfügbarkeitsmeldungen 700 verwenden.

Bei einer Verteilung der Verfügbarkeitsmeldung 700 an eine Anzahl N interessierter Kommunikationsteilnehmern müssen nach der vollständigen Zustellung auch entsprechend N Kopien der Verfügbarkeitsmeldung 700 angefertigt worden sein, die auf N unterschiedlichen Wegen zugestellt wurden. Jeder Kommunikationsteilnehmer erhält dabei eine Kopie der Verfügbarkeitsmeldung 700, wobei der Nachrichteninhalt der Verfügbarkeitsmeldung 700 identisch, aber die Rückwegbeschreibung in jeder Kopie individuell ist.

Die Verfügbarkeitsmeldung 700 des Dienstes mit zugehöriger individueller Rückwegbeschreibung wird von dem Kommunikationsteilnehmer dazu verwendet, Anforderungsnachrichten 740 an den jeweiligen Dienst zu senden. Der Anforderungsnachricht 740 wird dabei eine Information in Form eines eigenen Feldes oder als Bestandteil eines Feldes zugeordnet, über welchen Weg die Anforderungsnachricht 740 an den Dienst zugestellt werden soll. Diese Information wird im Weiteren als Zustellweg bezeichnet.

Als Startwert für den Zustellweg der Anforderungsnachricht 740 verwendet der Kommunikationsteilnehmer die Rückwegbeschreibung der Verfügbarkeitsmeldung 700. Anhand der Wegabschnittsbezeichnungen im Startwert des Zustellweges wählt der Kommunikationsteilnehmer den Übertragungsweg aus.

Dabei wird der Wert des Zustellweges bei der Übertragung zum jeweils nächsten Nachrichtenvermittler oder einem Kommunikationsteilnehmer um jeweils die Wegabschnittsbezeichnung des während der Übertragung zurückgelegten Wegabschnitts reduziert. Die Reduzierung des Zustellweges kann dabei vor, während oder nach der Übertragung zum jeweils nächsten Nachrichtenvermittler oder einem Kommunikationsteilnehmer ausgeführt werden.

Der Zustellweg enthält dann nur noch die Wegabschnittsbezeichnungen der Teile des Übertragungsweges, über die die Anforderungsnachricht 740 noch vermittelt werden muss. Die Ordnung der Wegabschnittsbezeichnungen im Zustellweg gibt vor, welches die nächste Wegabschnittsbezeichnung ist.

Wenn die Anforderungsnachricht 740 den Nachrichtenvermittler, der mit dem den Dienst anbietenden Kommunikationsteilnehmer direkt verbunden ist, erreicht hat, ist der Wert des Zustellweges leer beziehungsweise nicht mehr vorhanden. Die Anforderungsnachricht 740 hat dann das Ziel erreicht.

Der Aufbau des Zustellweges entspricht dem Aufbau der Rückwegbeschreibung. Wenn bei der Übertragung der Verfügbarkeitsmeldung 700 der Wert der Rückwegbeschreibung jeweils vorne durch weitere Wegabschnittsbezeichnungen erweitert wurde, dann ist für die Übertragung aus dem Zustellweg jeweils die vorderste Wegabschnittsbezeichnung zu wählen und zu reduzieren. Analog gilt, wenn der Wert der Rückwegbeschreibung in der Verfügbarkeitsmeldung 700 durch Anhängen weiterer Wegabschnittsbezeichnungen erweitert wurde, sind für die Übertragung aus dem Zustellweg jeweils die hintersten Wegabschnittsbezeichnungen zu wählen und zu reduzieren.

Die Werte der Wegabschnittsbezeichnungen für Rückwegbeschreibungen beziehungsweise Zustellwege können automatisch auf verschiedene Weise bestimmt werden.

Die Wegabschnittsbezeichnungen können durch den jeweiligen Nachrichtenvermittler bestimmt werden, zu dem ein Kommunikationsteilnehmer oder ein weiterer Nachrichtenvermittler eine Kommunikationsverbindung aufbaut, also durch den Nachrichtenvermittler, der die Kommunikationsverbindung annimmt.

Der Nachrichtenvermittler kann dabei beispielsweise der Kommunikationsverbindung einen eindeutigen Wert zuordnen, beispielsweise indem der Nachrichtenvermittler beim Annehmen der Kommunikationsverbindung der Kommunikationsverbindung einen nächsten freien Wert zuordnet.

Auch können den Wegabschnittsbezeichnungen feste Werte zugeordnet sein. Solche Werte können beispielsweise der Wert sein, der dem Kommunikationsteilnehmer beziehungsweise dem Nachrichtenvermittler, der die Kommunikationsverbindung zum nächsten Nachrichtenvermittler aufbaut, zugeordnet ist. Die Werte werden dabei so vergeben, dass die Werte zumindest aus Sicht des Nachrichtenvermittlers, der an der Kommunikationsverbindung beteiligt ist, eindeutig sind.

Ferner können als Wegabschnittsbezeichnungen auch Werte für die Kommunikationsverbindungen zwischen Kommunikationsteilnehmern und Nachrichtenvermittlern beziehungsweise benachbarten Nachrichtenvermittlern genutzt werden. Dabei kann einer Kommunikationsverbindung für die beiden Übertragungsrichtungen jeweils auch ein eigener Wert zugeordnet sein. Bei einer Rückwegbeschreibung muss dann bei der Erweiterung des Wertes für die Rückwegbeschreibung stets die Werte der Gegenübertragungsrichtung verwendet werden, damit dem auf der Rückwegbeschreibung basierende Zustellweg dann bei der Auswahl des nächsten Übertragungsabschnitts die korrekte Übertragungsrichtung vorgegeben ist.

Als Wert können Namen oder Nummern oder eine Mischung von Namen und Nummern verwendet werden. Die Wegabschnittsbezeichnung muss dabei nur in einem lokal begrenzten Teil der Kommunikationsinfrastruktur eindeutig sein. Es besteht so die Möglichkeit, lokal und autonom Teile der Kommunikationsinfrastruktur umzugestalten, ohne dass weitere Teile der Kommunikationsinfrastruktur informiert werden müssen.

Damit ein Dienst einem Kommunikationsteilnehmer auf eine Anforderungsnachricht 740 antworten kann, fügt der Kommunikationsteilnehmer der Anforderungsnachricht 740 analog zum Aufbau einer Verfügbarkeitsmeldung 700 durch einen Nachrichtenvermittler ein Feld für eine Rückwegbeschreibung hinzu, das anfangs leer oder nicht vorhanden ist und bei Erreichen des Dienstes dann einen Wert enthält, der anschließend von dem Dienst verwendet werden kann, um eine Antwortnachricht 780 mit dem Wert für den Zustellweg an den die Anforderungsnachricht 740 absendenden Kommunikationsteilnehmer auszustatten. Der Wert für die Rückwegbeschreibung der Anforderungsnachricht 740 wird auf dieselbe Weise erzeugt wie die Rückwegbeschreibung bei der Verfügbarkeitsmeldung 700.

Wenn Kommunikationsteilnehmer mithilfe einer Verfügbarkeitsmeldung 700 von einem Dienst erfahren und an den Dienst dann eine Anforderungsnachricht 740 senden sowie optional eine Antwortnachricht 780 von dem Dienst erhalten, ist es nicht notwendig, dass vor einer weiteren Anforderungsnachricht 740 des Kommunikationsteilnehmers an den Dienst eine weitere Verfügbarkeitsmeldung 700 abgewartet werden muss. Der Zustellweg zum Dienst ist dem Kommunikationsteilnehmer bereits bekannt. Der Kommunikationsteilnehmer kann für beliebig viele weitere Anforderungsnachrichten 740 an den Dienst den bekannten Zustellweg verwenden.

Sollten nach dem Empfang einer Verfügbarkeitsmeldung 700 Teile der Kommunikationsinfrastruktur umgestaltet werden, ändern sich gegebenenfalls der Zustellweg, der auf der Rückwegbeschreibung der Verfügbarkeitsmeldung 700 basiert. Die Kommunikationsteilnehmer können den Zustellwegfehler beispielsweise erkennen, wenn innerhalb einer erwarteten Reaktionszeit eine Antwortnachricht vom Dienst auf eine Anforderungsnachricht ausbleibt.

Damit bei einer Umgestaltung in der Kommunikationsinfrastruktur Dienste weiter erreicht werden können, können Dienste periodisch oder auch bedarfsgesteuert weitere Verfügbarkeitsmeldungen 700 versenden, beispielsweise mit Hilfe von Retain-Nachrichten der Nachrichtenvermittler nach dem Standard "MQTT-Version 5.0".

Wie in Figur 5 gezeigt, umfasst eine Verfügbarkeitsmeldung 700 erste Metadaten 701, die auch als "Header" oder "Properties" bezeichnet werden, und einen ersten Nachrichteninhalt 710, der auch als "Payload" bezeichnet wird. Die ersten Metadaten 701 umfassen einen ersten Themennamen 702, eine erste Rückwegbeschreibung 730 und optional einen einmaligen Wert 704. Der einmalige Wert 704 kann beispielsweise mit einem Verfahren aus dem Standard RFC 4122 "Universally unique Identifier UUID URN Namespace" generiert werden.

Der erste Nachrichteninhalt 710 der Verfügbarkeitsmeldung 700 beschreibt den Dienst. Anhand der Dienstbeschreibung können die Kommunikationsteilnehmer dann entscheiden, ob sie den Dienst in Anspruch nehmen wollen. Die Kommunikationsteilnehmer senden Anforderungsnachrichten 740 an den Dienst und erwarten gegebenenfalls Antwortnachrichten 780.

Der erste Nachrichteninhalt 710 der Verfügbarkeitsmeldung 700 beschreibt einen Diensttyp 711, der die Art des Dienstangebotes erkennbar macht, und eine Dienstversion 713, die der Dienst bezogen auf den Diensttyp 711 implementiert hat.

Üblicherweise werden die Diensttypen 710 mit der Zeit weiterentwickelt und neuere Versionen unterstützen einen größeren oder anderweitig verbesserten oder an den aktuellen Stand der Technik angepassten Funktionsumfang. Die Benennung der vom Dienst unterstützten Versionen ermöglicht es, den dem Kommunikationsteilnehmer zu erkennen, ob der Kommunikationsteilnehmer eine bestimmte Gestalt einer Anforderungsnachricht 740 verstehen wird.

Weiter kann der erste Nachrichteninhalt 710 eine Teilnehmeridentifikation 712 enthalten, die entweder den Dienst eindeutig innerhalb des Automatisierungssystems identifiziert oder eine Gruppe von Diensten benennt, die zusammengehören und nicht unterschieden werden müssen. Die Teilnehmeridentifikation 712 kann der Kommunikationsteilnehmer verwenden, um zu entscheiden, mit welchen Diensten von mehreren Diensten gleichen Typs der Kommunikationsteilnehmer interagieren möchte. Eine Teilnehmeridentifikation 712, die einen Dienst bezeichnet, kann beispielsweise eine Adresse sein. Eine Teilnehmeridentifikation 712, die eine Gruppe von Diensten bezeichnet, kann beispielsweise eine Angabe über die Zugehörigkeit des Dienstes zu einer Organisation sein.

Die Teilnehmeridentifikation 712 kann alternativ in der Verfügbarkeitsmeldung 700 statt im Nachrichteninhalt 710 auch in der Metainformation 701 enthalten sein, beispielsweise als Teil des Themennamens 702.

Wie Figur 6 zeigt, setzt sich eine Anforderungsnachricht 740 eines Kommunikationsteilnehmers analog zu einer Verfügbarkeitsmeldung 700 aus zweiten Metadaten 741 und einem zweiten Nachrichteninhalt 750 zusammen. Bestandteile der zweiten Metadaten 741 sind ein erster Zustellweg 742, optional eine zweite Rückwegbeschreibung 743 und ebenfalls optional erste Korrelationsdaten 744. Der erste Zustellweg 742 beschreibt den Weg, über den die Anforderungsnachricht 740 zum gewünschten Dienst übertragen werden soll. Die zweite Rückwegbeschreibung 743 zur Anforderungsnachricht 740 wird nur benötigt, wenn eine Antwortnachricht 780 vom Dienst erwartet wird.

Der Anforderungsnachricht 740 sind die ersten Korrelationsdaten 744 zugeordnet, wenn der Kommunikationsteilnehmer demselben oder verschiedenen Diensten mehrere Anforderungsnachrichten 740 sendet, ohne vorher auf die Antwortnachrichten 780 zu warten. Der Dienst kopiert dann die ersten Korrelationsdaten 744 aus der jeweiligen Anforderungsnachricht 740 in die Antwortnachricht 780 und der Kommunikationsteilnehmer kann anhand der ersten Korrelationsdaten 744 nach Erhalt der Antwortnachricht 780 zuordnen, zu welcher Anforderungsnachricht 740 die Antwortnachricht 780 gehört.

Wie Figur 7 zeigt, besteht eine Antwortnachricht 780 ähnlich wie eine Verfügbarkeitsmeldung 700 oder eine Anforderungsnachricht 740 aus dritten Metadaten 781 und einem dritten Nachrichteninhalt 790. Den dritten Metadaten 781 sind ein zweiter Zustellweg 782, optional eine dritte Rückwegbeschreibung 783 und ebenfalls optional zweite Korrelationsdaten 784 zugeordnet. Der zweite Zustellweg 782 beschreibt den Übertragungsweg, über den die Antwortnachricht 780 des Dienstes zu dem Kommunikationsteilnehmer übertragen werden soll, der die zugehörige Anforderungsnachricht 740 versandt hat.

Für den Wert des Zustellweges in der Antwortnachricht 780 verwendet der Dienst die Rückwegbeschreibung aus der Anforderungsnachricht 740. Wenn die Anforderungsnachricht 740 erste Korrelationsdaten 744 enthielt, wiederholt der Dienst die zweiten Korrelationsdaten 784 in der Antwortnachricht 780, damit der anfragende Kommunikationsteilnehmer die Antwortnachricht 780 der Anforderungsnachricht 740 zuordnen kann. Dieses ist besonders dann vorteilhaft, wenn der Dienst sich in der Verfügbarkeitsmeldung 700 ohne eindeutige Teilnehmeridentifikation gemeldet hat und der Kommunikationsteilnehmer mit mehreren Diensten desselben Diensttyps 711 interagiert.

Figur 8 zeigt schematisch einen möglichen Aufbau eines Automatisierungssystems. Das bespielhafte Automatisierungssystem 800 weist vier Kommunikationsteilnehmer auf, einen ersten Kommunikationsteilnehmer 806, einen zweiten Kommunikationsteilnehmer 807, einen dritten Kommunikationsteilnehmer 808 und einen vierten Kommunikationsteilnehmer 809. Es können grundsätzlich beliebig viele Kommunikationsteilnehmer im Automatisierungssystem vorgesehen sein.

Alle Kommunikationsteilnehmer im Automatisierungssystem 800 sind mit einem Nachrichtenvermittler 801 über eine zugeordnete Vermittlungsbrücke verbunden. Das heißt, der ersten Kommunikationsteilnehmer 806 ist über eine erste Vermittlungsbrücke 810 mit dem Nachrichtenvermittler 801 verbunden, der zweite Kommunikationsteilnehmer 807 ist über eine zweite Vermittlungsbrücke 811 mit dem Nachrichtenvermittler 801 verbunden, der dritte Kommunikationsteilnehmer 808 ist über eine dritte Vermittlungsbrücke 812 mit dem Nachrichtenvermittler 801 verbunden und der vierte Kommunikationsteilnehmer 809 ist über eine vierte Vermittlungsbrücke 813 mit dem Nachrichtenvermittler 801 verbunden.

Statt über Vermittlungsbrücke können die Kommunikationsteilnehmer auch direkt über Kommunikationsverbindungen an den Nachrichtenvermittler angebunden sein. Auch können statt eines einzelnen Nachrichtenvermittlers auch Netzwerke von Nachrichtenvermittlern eingesetzt werden.

Weiterhin kann das Automatisierungssystem auch Erweiterungen aufweisen. So können weitere Systemabschnitte hinzugefügt sein, die Kommunikationsteilnehmer, Nachrichtenvermittler und Vermittlungsbrücken umfassen.

Jeder Kommunikationsteilnehmer umfasst in der Regel einen Teilnehmer-Nachrichtenvermittler, der mit der zugeordneten Vermittlungsbrücke verbunden ist. Das heißt, der ersten Kommunikationsteilnehmer 806 ist über einen ersten Teilnehmer-Nachrichtenvermittler 802 mit der ersten Vermittlungsbrücke 810 verbunden, der zweite Kommunikationsteilnehmer 807 ist über einen zweiten Teilnehmer-Nachrichtenvermittler 803 mit der zweiten Vermittlungsbrücke 811 verbunden, der dritte Kommunikationsteilnehmer 808 ist über einen dritten Teilnehmer-Nachrichtenvermittler 804 mit der dritten Vermittlungsbrücke 812 verbunden und der vierte Kommunikationsteilnehmer 809 ist über einen vierten Teilnehmer-Nachrichtenvermittler 805 mit der vierten Vermittlungsbrücke 813 verbunden.

Jede Vermittlungsbrücke kann statt, wie in Figur 8 gezeigt, getrennt von zugeordneten Kommunikationsteilnehmer ausgeführt, auch in den zugeordneten Kommunikationsteilnehmer integriert sein. Die Vermittlungsbrücke kann dabei Teil des Teilnehmer-Nachrichtenvermittlers im Kommunikationsteilnehmer sein.

Jeder Vermittlungsbrücke ist eine Brückenbezeichnung zugeordnet, die die Vermittlungsbrücke eindeutig in Bezug auf die weiteren Vermittlungsbrücken kennzeichnet, die mit dem Nachrichtenvermittler 801 verbunden sind. In einem Automatisierungssystem 800 müssen grundsätzlich dann Brückenbezeichnungen untereinander einmalig sein, wenn die Vermittlungsbrücken mit demselben Nachrichtenvermittler beziehungsweise Teilnehmer-Nachrichtenvermittler verbunden sind.

In Figur 8 hat die erste Vermittlungsbrücke 810 als erste Brückenbezeichnung 820 den Buchstaben "e", die zweite Vermittlungsbrücke 811 als zweite Brückenbezeichnung 821 den Buchstaben "f", die dritte Vermittlungsbrücke 812 als dritte Brückenbezeichnung 822 den Buchstaben "g" und die vierte Vermittlungsbrücke 813 als vierte Brückenbezeichnung 823 den Buchstaben "h".

Jedem Nachrichtenvermittler beziehungsweise Teilnehmer-Nachrichtenvermittler ist eine Vermittlerbezeichnung zugeordnet, wobei analog zu den Brückenbezeichnungen gilt, dass Nachrichtenvermittler beziehungsweise Teilnehmer-Nachrichtenvermittler dann unterschiedliche Vermittlerbezeichnungen zugeordnet sein müssen, wenn sie über eine Vermittlungsbrücke miteinander verbunden sind. Aus diesem Grund gilt im in Figur 8 gezeigten Automatisierungssystem 800, dass alle Vermittlerbezeichnungen eindeutig sein müssen, da in dem Automatisierungssystem 800 alle in den Kommunikationsteilnehmern enthaltenen Teilnehmer-Nachrichtenvermittler mit demselben Nachrichtenvermittler 801 über eine zugeordnete Vermittlungsbrücke verbunden sind.

Im in Figur 8 gezeigten Automatisierungssystem 800 hat der erste Teilnehmer-Nachrichtenvermittler 802 als erste Vermittlerbezeichnung 842 den Buchstaben "B", der zweite Teilnehmer-Nachrichtenvermittler 803 als zweite Vermittlerbezeichnung 843 den Buchstaben "C", der dritte Teilnehmer-Nachrichtenvermittler 804 als dritte Vermittlerbezeichnung 844 den Buchstaben "D" und der vierte Teilnehmer-Nachrichtenvermittler 805 als vierte Vermittlerbezeichnung 845 den Buchstaben "E".

Die Vorgabe, dass die Brückenbezeichnungen und die Vermittlerbezeichnungen nur in lokalen Grenzen eindeutig sein müssen, gewährleistet eine Autonomie bei der Vergabe der Bezeichnungen innerhalb der lokalen Grenzen.

Jeder Kommunikationsteilnehmer umfasst eine Teilnehmeridentifikation, die mit dem jeweiligen Teilnehmer-Nachrichtenvermittler verbunden ist und den Teilnehmer-Nachrichtenvermittler eindeutig bezeichnet.

Im in Figur 8 gezeigten Automatisierungssystem 800 weist der ersten Kommunikationsteilnehmer 806 eine erste Teilnehmeridentifikation 832 für den ersten Teilnehmer-Nachrichtenvermittler 802, der zweite Kommunikationsteilnehmer 807 eine zweite Teilnehmeridentifikation 833 für den zweiten Teilnehmer-Nachrichtenvermittler 803, der dritte Kommunikationsteilnehmer 808 eine dritte Teilnehmeridentifikation 834 für den dritten Teilnehmer-Nachrichtenvermittler 804 und der vierte Kommunikationsteilnehmer 309 eine vierte Teilnehmeridentifikation 835 für den vierten Teilnehmer-Nachrichtenvermittler 805 auf.

Im Folgenden wird zwischen Applikationen und Diensten unterschieden. Applikationen sind dabei ausgeführte Programme oder Verfahren, die einen Dienst zu einer Aktion veranlassen, während Dienste ausgeführte Programme oder Verfahren sind, die Aktionen im Auftrag einer Applikation ausführen und gegebenenfalls mit einer Reaktion wie beispielsweise Ergebnissen beantworten. Dieselbe ausgeführte Instanz eines Programms kann dabei sowohl als Dienst als auch als Applikation agieren. Grundsätzlich ist es aber möglich, auf eine Unterscheidung zwischen Applikationen und Diensten zu verzichten.

Damit Dienste Aktionen ausführen können, ist jedem Dienst eine Objektsammlung zugeordnet, auf der der Dienst Aktionen ausführt. Objekte einer Objektsammlung sind beispielsweise Variablenwerte eines Programms, Einträge in einer Datenbank oder Methoden, die ausgeführt werden können. Ein Objekt kann auch durch die Instanz einer Klasse einer höheren Programmiersprache wie beispielsweise C++ implementiert werden. Objekte können grundsätzlich beliebige reale oder virtuelle Gegenstände abbilden.

In einem Automatisierungssystem 800 kann jeder Kommunikationsteilnehmer eine beliebige Anzahl von Diensten und/ oder Applikationen umfassen, die jeweils über eine eigene Kommunikationsverbindung mit dem Teilnehmer-Nachrichtenvermittler des Kommunikationsteilnehmers kommunizieren können, um per Abonnement von Themennamen 441 und/ oder Themenfiltern 451 Nachrichten zu empfangen und per Publikation an ein bestimmtes Thema Nachrichten zu versenden.

Die Kommunikationsteilnehmer im Automatisierungssystem 800 können jeweils eine separate Einheit in Form eines physikalischen Gerätes bilden. Die Kommunikationsteilnehmer können sich aber auch aus mehreren Geräten zusammensetzen, die über physikalische oder kabellose Kommunikationsverbindungen miteinander kommunizieren können. Dienste, Applikationen und Teilnehmer-Nachrichtenvermittler eines Kommunikationsteilnehmers können beispielsweise auf verschiedenen Geräten ausgeführt werden. Die Dienste, Applikationen und Teilnehmer-Nachrichtenvermittler eines Kommunikationsteilnehmers können auch zusammen auf demselben Gerät mit Diensten, Applikationen und Teilnehmer-Nachrichtenvermittlern eines weiteren Kommunikationsteilnehmers ausgeführt werden.

Auch können die Vermittlungsbrücken als ein einzelnes Gerät ausgelegt sein oder einen Teil des Geräts beziehungsweise des Gerätesystems eines zugeordneten Kommunikationsteilnehmers bilden. Ferner können die Vermittlungsbrücken eine Einheit zusammen mit dem Nachrichtenvermittler bilden.

Im in Figur 8 gezeigten Automatisierungssystem 800 weist der ersten Kommunikationsteilnehmer 806 einen ersten Dienst 860 auf, der über eine erste Kommunikationsverbindung 850 mit dem ersten Teilnehmer-Nachrichtenvermittler 802 verbunden ist. Dem ersten Dienst 860 ist dabei eine erste Objektsammlung 880 zugeordnet.

Der zweite Kommunikationsteilnehmer 807 weist einen zweiten Dienst 861, der über eine zweite Kommunikationsverbindung 851 mit dem zweiten Teilnehmer-Nachrichtenvermittler 803 verbunden ist, und einen dritten Dienst 862, der über eine dritte Kommunikationsverbindung 852 mit dem zweiten Teilnehmer-Nachrichtenvermittler 803 verbunden ist, auf. Dem zweiten Dienst 861 ist eine zweite Objektsammlung 881 und dem dritten Dienst 862 ist eine dritte Objektsammlung 882 zugeordnet.

Der dritte Kommunikationsteilnehmer 808 weist einen vierten Dienst 863 auf, der über eine vierte Kommunikationsverbindung 853 mit dem dritten Teilnehmer-Nachrichtenvermittler 804 verbunden ist. Dem vierten Dienst 863 ist dabei eine vierte Objektsammlung 883 zugeordnet. Der dritte Kommunikationsteilnehmer 808 umfasst ferner eine erste Applikation 864, die über eine fünfte Kommunikationsverbindung 854 mit dem dritten Teilnehmer-Nachrichtenvermittler 804 verbunden ist, und eine zweite Applikation 865, die über eine sechste Kommunikationsverbindung 855 mit dem dritten Teilnehmer-Nachrichtenvermittler 804 verbunden ist.

Der vierte Kommunikationsteilnehmer 809 weist eine dritte Applikation 866 auf, die über eine siebte Kommunikationsverbindung 856 mit dem vierten Teilnehmer-Nachrichtenvermittler 805 verbunden ist.

Im Automatisierungssystem 800 ist jedem Dienst eine Dienstbezeichnung und jeder Applikation eine Applikationsbezeichnung zugeordnet. Die Dienstbezeichnungen beziehungsweise die Applikationsbezeichnungen müssen dabei innerhalb des jeweiligen Kommunikationsteilnehmers eindeutig sein.

Wie in Figur 8 gezeigt, hat im ersten Kommunikationsteilnehmer 806 der erste Dienst 860 als erste Dienstbezeichnung 870 den Buchstaben "s". Der zweite Dienst 861 des zweiten Kommunikationsteilnehmers 807 hat als zweite Dienstbezeichnung 871 auch den Buchstaben "s". Der dritte Dienst 862 des zweiten Kommunikationsteilnehmers 807 hat als dritte Dienstbezeichnung 872 den Buchstaben "p".

Im dritten Kommunikationsteilnehmer 808 hat der vierte Dienst 863 als vierte Dienstbezeichnung 873 wiederum den Buchstaben "s". Die erste Applikation 864 des dritten Kommunikationsteilnehmers 808 hat als erste Applikationsbezeichnung 874 den Buchstaben "v" und die zweite Applikation 865 des dritten Kommunikationsteilnehmers 808 hat als zweite Applikationsbezeichnung 875 den Buchstaben "w". Im vierten Kommunikationsteilnehmer 809 hat die dritte Applikation 866 als dritte Applikationsbezeichnung 876 wiederum den Buchstaben "w".

Die Nachrichtenvermittler 801 beziehungsweise Teilnehmer-Nachrichtenvermittler nutzen Themenbäume 400, damit eine Anforderungsnachricht 740 zu einem Themennamen 441 veröffentlicht werden kann beziehungsweise eine Antwortnachricht 780 über ein Abonnement eines Themennamens 441 oder eines Teil des Themenbaums 400 mit einem Themenfilter 451 erhalten werden kann. Dabei kann der Zustellweg jeweils als Teil des Themas beziehungsweise analog als Teil des Antwortthemas 481 angegeben werden. Die Wegabschnittsbezeichnungen des Zustellweges entsprechen dann den Themenelementen in den Themenebenen des Themas beziehungsweise des Antwortthemas 481. Der Teil im Themenbaum 400, welcher die Wegabschnittsbezeichnungen enthält, wird als Weg-Baumschicht bezeichnet.

Die Zustellwege beziehen sich auf den jeweiligen Nachrichtenvermittler 801 beziehungsweise Teilnehmer-Nachrichtenvermittler und ändern sich deshalb von Nachrichtenvermittler beziehungsweise Teilnehmer-Nachrichtenvermittler zu Nachrichtenvermittler 801 beziehungsweise Teilnehmer-Nachrichtenvermittler. Das hat zur Konsequenz, dass sich die Anordnung der Themenebenen innerhalb eines Themenbaumes 400 für den Zustellweg aus der Perspektive des jeweiligen Nachrichtenvermittlers 801 beziehungsweise Teilnehmer-Nachrichtenvermittler ändern.

Im Betrieb muss ein Nachrichtenvermittler 801 beziehungsweise Teilnehmer-Nachrichtenvermittler dabei nicht zwingend einen vollständigen Themenbaum 400 für das Automatisierungssystem 800 kennen. Im Nachrichtenvermittler 801 beziehungsweise Teilnehmer-Nachrichtenvermittler liegt dann nur die Kenntnis der Teile des Themenbaums 400, der sich aus den Themen der veröffentlichten Nachrichten und den vorliegenden Abonnements zusammensetzt.

Im Folgenden wird der Aufbau von Themenbäumen 400 erläutert, bei denen Brückenbezeichnungen zur Kennzeichnung von Zustellwege verwendet werden. Statt Brückenbezeichnungen als Wegabschnittsbezeichnungen können, wie vorstehend erläutert, auch andere Werte aus dem Automatisierungssystem 800 verwendet werden, wie zum Beispiel Vermittlerbezeichnungen.

Figur 9 zeigt dabei einen ersten Themenbaum 1000 aus Sicht des Nachrichtenvermittlers 801 im Automatisierungssystem 800 aus Figur 8. Ferner zeigt Figur 10 einen zweiten Themenbaum 1100 aus Sicht des ersten Teilnehmer-Nachrichtenvermittlers 802 im ersten Kommunikationsteilnehmer 806 des Automatisierungssystems 800 aus Figur 8.

Im ersten Themenbaum 1000 wird zwischen Themen unterschieden, die einen Zustellweg enthalten und solche, die keinen oder gleichbedeutend einen leeren Zustellweg enthalten. Anhand des Themas kann dann bestimmt werden, ob eine Nachricht lokal an eine oder mehrere Applikationen und/ oder Dienste eines Kommunikationsteilnehmers zugestellt werden soll oder vor der Zustellung erst über Wegabschnitte transportiert werden muss. Weiter sind im ersten Themenbaum 1000 Themen für Verfügbarkeitsmeldungen 700 gekennzeichnet, da Verfügbarkeitsmeldungen 700 über alle Kommunikationsverbindungen weitergeleitet werden, um alle Kommunikationsteilnehmer zu erreichen.

Aus Sicht der Nachrichtenvermittler 801 beziehungsweise Teilnehmer-Nachrichtenvermittler werden die Wurzeln des Themenbaumes dazu verwendet, um die vorstehend genannten drei Arten von Themen im Themenbaum zu unterscheiden. Die Wurzel mit dem Buchstaben "m" steht für "multicast" ("Übertragung an mehrere Empfänger") und beschreibt alle Themen, die in Verfügbarkeitsmeldungen 700 verwendet werden. Die Wurzel mit dem Buchstaben "d" steht für "direction" ("Richtung") und beschreibt alle Themen, bei denen die Themen enthaltende Nachrichten einen Zustellweg aufweisen. Die Wurzel mit dem Buchstaben "I" steht für "local" ("lokal") und ist allen Themen zugeordnet, bei denen die Themen enthaltende Nachrichten keinen Zustellweg enthält und die deshalb nicht über Wegabschnitte transportiert werden müssen. Statt der Verwendung der Wurzeln des Themenbaumes zur Kennzeichnung der drei Arten von Themen können auch andere Formen der Kennzeichnung verwendet werden.

Bei dem in Figur 9 gezeigten ersten Themenbaum 1000 aus Sicht des Nachrichtenvermittlers 801 sind eine erste Wurzel "m" 1001 für "multicast" und eine erste Wurzel "d" 1002 für "direction" vorgesehen. Eine erste Wurzel "I" für "local" wird nicht benötigt und entsteht deshalb nicht im ersten Themenbaum 1000, da der Nachrichtenvermittler 801 mit keiner Applikation beziehungsweise mit keinem Dienst eine direkte Kommunikationsverbindung aufweist.

Bei dem in Figur 10 gezeigten zweiten Themenbaum 1100 aus Sicht des ersten Teilnehmer-Nachrichtenvermittlers 802 im ersten Kommunikationsteilnehmer 806 ist zusätzlich zu einer zweiten Wurzel "m" 1101 für "multicast" und einer zweiten Wurzel "d" 1103 für "direction" auch eine zweite Wurzel "I" 1102 für "local" enthalten, da der erste Dienst 860 im ersten Kommunikationsteilnehmer 806 die erste Kommunikationsverbindung 850 zum ersten Teilnehmer-Nachrichtenvermittler 802 im ersten Kommunikationsteilnehmer 806 unterhält und Themen unterhalb der Wurzel "I" abonniert.

Zustellwege sind im ersten Themenbaum 1000 und im zweiten Themenbaum 1100 unterhalb der ersten Wurzel "d" 1002 beziehungsweise unterhalb der zweiten Wurzel "d" 1103 abgebildet. Die auf Wurzel "d" folgenden untergeordneten Themenebenen enthalten als Themenelemente jeweils Wegabschnittsbezeichnungen in Form Brückenbezeichnungen, die eine Weg-Baumschicht bilden, bis eine Stopp-Baumschicht in Form einer weiteren Themenebene das Ende des Zustellweges im Themenbaum mit einem vorgegebenen Stoppwert, der nicht für eine Wegabschnittsbezeichnung steht, kennzeichnet.

Bei dem in Figur 8 gezeigten Automatisierungssystem 800 hat der Nachrichtenvermittler 801 folgende Wegabschnitte zu weiteren Teilnehmer-Nachrichtenvermittlern in den Kommunikationsteilnehmern in Form von Brückenverbindungen. Der Nachrichtenvermittler 801 ist über die erste Vermittlungsbrücke 810 mit der erste Brückenbezeichnung 820, die den Buchstaben "e" aufweist, mit dem ersten Teilnehmer-Nachrichtenvermittler 802 im ersten Kommunikationsteilnehmer 806 verbunden. Der Nachrichtenvermittler 801 ist über die zweite Vermittlungsbrücke 811 mit der zweiten Brückenbezeichnung 821, die den Buchstaben "f" aufweist, mit dem zweiten Teilnehmer-Nachrichtenvermittler 803 im zweiten Kommunikationsteilnehmer 807 verbunden. Der Nachrichtenvermittler 801 ist über die dritte Vermittlungsbrücke 812 mit der dritten Brückenbezeichnung 822, die den Buchstaben "g" aufweist, mit dem dritten Teilnehmer-Nachrichtenvermittler 804 im dritten Kommunikationsteilnehmer 808 verbunden. Der Nachrichtenvermittler 801 ist über die vierte Vermittlungsbrücke 813 mit der vierten Brückenbezeichnung 823, die den Buchstaben "h" aufweist, mit dem vierten Teilnehmer-Nachrichtenvermittler 805 im vierten Kommunikationsteilnehmer 809 verbunden.

Bei dem in Figur 9 gezeigten ersten Themenbaum 1000 aus Sicht des Nachrichtenvermittlers 801 sind deshalb unter der ersten Wurzel "d" 1002 in einer ersten Weg-Baumschicht 1020 für Zustellwege beziehungsweise Rückwegbeschreibungen als Themenelemente in einer Themenebene die folgenden Wegabschnittsbezeichnungen in Form von Brückenbezeichnungen angegeben: Erstes Weg-Themenelement "e" 1031, zweites Weg-Themenelement "f" 1032, drittes Weg-Themenelement "g" 1033 und viertes Weg-Themenelement "h" 1034.

Da der Nachrichtenvermittler 801 mit den weiteren Teilnehmer-Nachrichtenvermittler immer direkt verbunden ist, folgt auf die eine Themenebene in der ersten Weg-Baumschicht 1020 im ersten Themenbaum 1000 keine weitere Themenebene für Zustellwege beziehungsweise Rückwegbeschreibungen. Das Ende der Zustellwege beziehungsweise der Rückwegbeschreibungen wird deshalb im ersten Themenbaum 1000 mit einer Stopp-Baumschicht angezeigt.

Im in Figur 9 gezeigte ersten Themenbaum 1000 sind in der Stopp-Baumschicht für jedes Themenelement der Themenebene in der ersten Weg-Baumschicht 1020 erste Stopp-Themenelemente 1035, zweite Stopp-Themenelemente 1036, dritte Stopp-Themenelemente 1037 und vierte Stopp-Themenelemente 1038 vorgesehen, die einen Platzhalter "[dend]" enthalten. Der Platzhalter "[dend]" ist in der Regel ein vorgegebener Wert. Vorteilhaft ist die Verwendung eines leeren Wertes für diese Themenelemente, weil eine Leerstelle als Wegabschnittsbezeichnung auch im wirklichen Leben nicht üblich ist.

Bei dem in Figur 8 gezeigten Automatisierungssystem 800 ist der erste Teilnehmer-Nachrichtenvermittler 802 im ersten Kommunikationsteilnehmer 806 über die erste Vermittlungsbrücke 810 mit der ersten Brückenbezeichnung 820, die den Buchstaben "e" aufweist, mit dem die Nachrichtenvermittler 801 verbunden, der dann wiederum über die zweite Vermittlungsbrücke 811 mit der zweiten Brückenbezeichnung 821, die den Buchstaben "f" aufweist, die Verbindung mit dem zweiten Teilnehmer-Nachrichtenvermittler 803 im zweiten Kommunikationsteilnehmer 807, über die dritte Vermittlungsbrücke 812 mit der dritten Brückenbezeichnung 822, die den Buchstaben "g" aufweist, die Verbindung mit dem dritten Teilnehmer-Nachrichtenvermittler 804 im dritten Kommunikationsteilnehmer 808 und über die vierte Vermittlungsbrücke 813 mit der vierten Brückenbezeichnung 823, die den Buchstaben "h" aufweist, die Verbindung mit dem vierten Teilnehmer-Nachrichtenvermittler 805 im vierten Kommunikationsteilnehmer 809 herstellt.

Da erste Teilnehmer-Nachrichtenvermittler 802 im ersten Kommunikationsteilnehmer 806 mit den Teilnehmer-Nachrichtenvermittlern in den weiteren Kommunikationsteilnehmern immer über den Nachrichtenvermittler 801 verbunden ist, weist der in Figur 10 gezeigte zweite Themenbaum 1100 deshalb einen zweiten Weg-Baumschicht 1120 für Zustellwege beziehungsweise Rückwegbeschreibungen mit zwei Themenebenen unter der zweiten Wurzel "d" 1103 auf. In einer ersten Themenebene der zweiten Weg-Baumschicht 1120 ist als Wegabschnittsbezeichnung in Form einer Brückenbezeichnung das fünfte Weg-Themenelement "e" 1130 angegeben, welches die direkte Verbindung vom ersten Teilnehmer-Nachrichtenvermittler 802 zum Nachrichtenvermittler 801 abbildet. In einer zweiten Themenebene der zweiten Weg-Baumschicht 1120 sind dann die Verbindungen vom Nachrichtenvermittler 801 zu den Teilnehmer-Nachrichtenvermittlern in den weiteren Kommunikationsteilnehmer über folgenden Wegabschnittsbezeichnungen in Form von Brückenbezeichnungen definiert: Sechstes Weg-Themenelement "f" 1131, siebtes Weg-Themenelement "g" 1132 und achtes Weg-Themenelement "h" 1133.

Das Ende der Zustellwege beziehungsweise der Rückwegbeschreibungen wird dann im zweiten Themenbaum 1100, wie Figur 10 zeigt, mit einer Stopp-Baumschicht angezeigt, welche für die Themenelemente der zweiten Themenebene in dem zweiten Weg-Baumschicht 1120 ein fünfte Stopp-Themenelement 1141, ein sechste Stopp-Themenelement 1142 und ein siebte Stopp-Themenelement 1143 aufweist, die den Platzhalter "[dend]" enthalten.

Beim Übertragen von Nachrichten zwischen den Nachrichtenvermittler 801 über die Vermittlungsbrücken werden die Themen in den Nachrichten so verändert, dass die Wegabschnittsbezeichnungen für den Zustellweg aus dem Thema entfernt werden. Alle Applikationen und Dienste des Kommunikationsteilnehmers abonnieren deshalb im ersten Themenbaum 1000 des Nachrichtenvermittlers 801 des Kommunikationsteilnehmers Themen mit konstanten Wurzeln ohne Weg-Baumschicht.

Die Themen für Abonnements durch Applikationen und Dienste eines Kommunikationsteilnehmers mit einer Kommunikationsverbindung zu dem Teilnehmer-Nachrichtenvermittler des Kommunikationsteilnehmers werden durch einen Themenbaumausschnitt unterhalb der Wurzel "l" beschrieben. Im Beispiel des zweiten Themenbaums 1100 in Fig. 10 ist eine erster Themenbaumausschnitt 1125 unterhalb der zweiten Wurzel "l" 1102 mit allen Themenebenen für Themen des ersten Dienstes 860 mit der ersten Kommunikationsverbindung 850 zum ersten Teilnehmer-Nachrichtenvermittlers 802 im ersten Kommunikationsteilnehmer 806 angeordnet.

Unter der zweiten Wurzel "m" 1101 sowie der zweiten Wurzel "l" 1102 beziehungsweise unter der Stopp-Baumschicht zur Kennzeichnung des Endes des Zustellweges bei der zweiten Wurzel "d" 1103 befinden sich die Themenbaumausschnitte mit den weiteren Themenebenen, die für die Bildung der Themen benötigt werden.

Die Themenbaumausschnitte für Verfügbarkeitsmeldungen 700, die unter der zweiten Wurzel "m" 1101 anzeigen, welche Dienste von den Kommunikationsteilnehmer bereitgestellt werden und unter welchen Themen die Kommunikationsteilnehmer Anforderungsnachrichten 740 erwarten, sind in allen Themenbäumen, die den Nachrichtenvermittlern 801 im Automatisierungssystem 800 aus Figur 8 zugeordnet sind, identisch. Im ersten Themenbaum 1000 aus Sicht des Nachrichtenvermittlers 801 beziehungsweise im zweiten Themenbaum 1100 ersten Teilnehmer-Nachrichtenvermittler 802 im ersten Kommunikationsteilnehmer 806 ist deshalb unter der ersten Wurzel "m" 1001 und der zweiten Wurzel "m" 1101 ein erster Themenbaumausschnitt 1025 vorgesehen.

Weil bei der Nachrichtenübertragung nur die Themenebenen der Themenbäume verändert, die den Zustellweg beziehungsweise die Rückwegbeschreibung, also die Weg-Baumschicht betreffen, sind auch die weiteren Themenbaumausschnitte in allen Themenbäumen, die den Nachrichtenvermittlern 801 im Automatisierungssystem 800 aus Figur 8 zugeordnet sind, identisch vorhanden.

Unter der Stopp-Baumschicht zur Kennzeichnung des Endes des Zustellweges befinden sich die Themenbaumausschnitte mit den Themenebenen, die von den Applikationen und Diensten im Automatisierungssystem 800 zu abonnieren sind. Bei den Nachrichtenvermittlern 801, die mit den Diensten oder Applikationen eine direkte Kommunikationsverbindung aufweisen, ist der Themenbaumausschnitt dann unter der zweiten Wurzel "l" 1102 angeordnet, da der Themenbaumausschnitt das jeweilige Ziel erreicht hat, das über den Zustellweg beschrieben ist.

Bei dem in Figur 9 gezeigten ersten Themenbaum 1000 aus Sicht des Nachrichtenvermittlers 801 sind unter der ersten Wurzel "d" 1002, getrennt durch die ersten Weg-Baumschicht 1020 und die sich anschließende Stopp-Baumschicht, ein zweiter Themenbaumausschnitt 1021 für den ersten Teilnehmer-Nachrichtenvermittler 802, ein dritter Themenbaumausschnitt 1022 für den zweiten Teilnehmer-Nachrichtenvermittler 803, ein vierter Themenbaumausschnitt 1023 für den dritten Teilnehmer-Nachrichtenvermittler 804 und ein fünfter Themenbaumausschnitt 1024 für den vierten Teilnehmer-Nachrichtenvermittler 805 vorgesehen.

Bei dem in Figur 10 gezeigten zweiten Themenbaum 1100 aus Sicht des ersten Teilnehmer-Nachrichtenvermittlers 802 sind unter der zweiten Wurzel "d" 1103, getrennt durch die zweite Weg-Baumschicht 1120 und die sich anschließende Stopp-Baumschicht, der siebte Themenbaumausschnitt 1122 für den zweiten Teilnehmer-Nachrichtenvermittler 803, der achte Themenbaumausschnitt 1123 für den dritten Teilnehmer-Nachrichtenvermittler 804 und der neunte Themenbaumausschnitt 1124 für den vierten Teilnehmer-Nachrichtenvermittler 805 angeordnet. Der sechste Themenbaumausschnitt 1121, der die Themen für die Dienste und Applikationen, die über die erste Kommunikationsverbindung 850 mit dem ersten Teilnehmer-Nachrichtenvermittler 802 im ersten Kommunikationsteilnehmer 806 verbunden sind, enthält, befindet sich dann unter der zweiten Wurzel "l" 1102.

Beim ersten Themenbaum 1000 aus der Sicht des Nachrichtenvermittlers 801 haben die Themen mit einem Zustellweg folgende Gestalt, wobei der Platzhalter 471 "#" eine beliebige Anzahl weiterer Themenebenen darstellt:
"d/e//#" für den Zustellweg zum ersten Teilnehmer-Nachrichtenvermittler 802 im ersten Kommunikationsteilnehmer 806,
"d/f/#" für den Zustellweg zum zweiten Teilnehmer-Nachrichtenvermittler 803 im zweiten Kommunikationsteilnehmer 807,
"d/g//#" für den Zustellweg zum dritten Teilnehmer-Nachrichtenvermittler 804 im dritten Kommunikationsteilnehmer 808 und
"d/h//#" für den Zustellweg zum vierten Teilnehmer-Nachrichtenvermittler 805 im vierten Kommunikationsteilnehmer 809.

Beim zweiten Themenbaum 1100 aus der Sicht des ersten Teilnehmer-Nachrichtenvermittlers 802 im ersten Kommunikationsteilnehmers 806 haben die Themen mit einem Zustellweg folgende Gestalt, wobei der Platzhalter 471 "#" eine beliebige Anzahl weiterer Themenebenen darstellt:
"d/e/f//#" für den Zustellweg zum zweiten Teilnehmer-Nachrichtenvermittler 803 im zweiten Kommunikationsteilnehmer 807,
"d/e/g//#" für den Zustellweg zum dritten Teilnehmer-Nachrichtenvermittler 804 im dritten Kommunikationsteilnehmer 808 und
"d/e/h//#" für den Zustellweg zum vierten Teilnehmer-Nachrichtenvermittler 805 im vierten Kommunikationsteilnehmer 809.

Für den Aufbau von Themenbaumausschnitten unter den Wurzeln beziehungsweise unter den Weg-Baumschichten im Themenbaum gibt es grundsätzlich eine Vielzahl von Möglichkeiten. Die Figuren 9 und 10 zeigen eine vorteilhafte Ausgestaltung, insbesondere was die Anordnung und die Anzahl der Themenebenen betrifft. Die gezeigte Anordnung der Themenebenen kann jedoch variiert werden. Auch kann die Reihenfolge der Themenebenen vertauscht werden. Ferner können einzelne Themenebenen weggelassen werden.

Im Folgenden der Aufbau des ersten Themenbaumausschnitt 1025 für Verfügbarkeitsmeldungen 700, der im ersten Themenbaum 1000 beziehungsweise im zweiten Themenbaum 1100 unter der ersten Wurzel "m" 1001 und der zweiten Wurzel "m" 1101 angeordnet ist, erläutert. Der Aufbau kann analog für die weiteren, im ersten Themenbaum 1000 beziehungsweise im zweiten Themenbaum 1100 Themenbaumausschnitte verwendet werden.

Unter der Wurzel "m" im Themenbaum ist eine erste Themenebene im ersten Themenbaumausschnitt 1025 mit einem fünfzehnten Themenelement "sv" 1003 angeordnet. Der Wert "sv" im fünfzehnten Themenelement 1003 steht dabei für "Dienst" (service) und zeigt an, dass die nachfolgenden Themenebenen Dienste betreffen. Die erste Themenebene wird dazu verwendet, um den Typ der Verfügbarkeitsmeldung 700 zu kennzeichnen, um so gegebenenfalls zwischen mehreren Typen von Verfügbarkeitsmeldungen 700 unterscheiden zu können.

Ein weiterer Typ von Verfügbarkeitsmeldungen 700 könnten beispielsweise Verfügbarkeitsmeldungen 700 sein, die von Applikationen und nicht von Diensten publiziert werden. Der weitere Typ von Verfügbarkeitsmeldungen 700 könnten dann wiederum durch ein weiteres Themenelement in der ersten Themenebene, dem dann ein anderer konstanter Wert zugeordnet ist, angezeigt werden.

Die Unterscheidung der Typen von Verfügbarkeitsmeldungen 700 muss aber nicht über eine Themenebene erfolgen, sondern kann auch durch den Nachrichteninhalt der Verfügbarkeitsmeldung 700 angezeigt werden. Durch die Unterscheidung mit Hilfe einer Themenebene haben Applikationen insbesondere bei der Verwendung des Standards "MQTT-Version 5.0" aber die Möglichkeit, durch das Abonnieren von Themen unterhalb des fünfzehnten Themenelements "sv" 1003 auch dann weiterhin ausschließlich Verfügbarkeitsmeldungen 700 von Diensten zu erhalten, auch wenn ein erweitertes Verfahren mit zusätzlichen Verfügbarkeitsmeldungstypen verwendet wird.

Die auf die ersten Themenebene folgende zweite Themenebene im ersten Themenbaumausschnitt 1025 weist ein sechzehntes Themenelement "[clid]" 1004 auf. Auf der zweiten Themenebene können jedoch eine Vielzahl von Themenelemente angeordnet sein. Der Wert "[clid]" stellt einen Platzhalter 471 dar, der beispielsweise einer Teilnehmeridentifikation entsprechen kann, die einem Kommunikationsteilnehmer in dem in Figur 8 gezeigten Automatisierungssystem 800 zur Kennzeichnung des zugehörigen Nachrichtenvermittlers oder Teilnehmer-Nachrichtenvermittler zugeordnet ist.

Wenn die Teilnehmeridentifikation ein sogenannter voll qualifizierter Rechnername inklusive eines Internet-Domainwerts wie beispielsweise "ipc4711.example.com" ist, kann als Wert für den Platzhalter 471 "[clid]" der voll qualifizierte Rechnername - im Beispiel "ipc4711.example.com" - in das sechzehnte Themenelement "[clid]" 1004 eingesetzt werden.

Statt einer einzelnen zweiten Themenebene kann sich die zweite Themenebene auch auf mehrere nacheinander angeordnete Themenebenen aufteilen. Für den voll qualifizierter Rechnername "ipc4711.example.com" für eine Teilnehmeridentifikation können alternativ zu der Darstellung in einem Themenelement in einer zweiten Themenebene auch drei Themenelemente in drei aufeinanderfolgenden zweiten Themenebenen verwendet werden, wobei die drei Themenelemente dann die Werten "com", "example", "ipc4711" in dieser Reihenfolge aufweisen.

Mit der zweiten Themenebene können Applikationen Verfügbarkeitsmeldungen 700 zu bestimmten Teilnehmeridentifikationen abonnieren, wenn sie an den Diensten interessiert sind, die direkte Kommunikationsverbindungen mit Nachrichtenvermittlern 801 unterhalten, welchen passende Teilnehmeridentifikationen zugeordnet sind. Die Teilnehmeridentifikation kann in die Verfügbarkeitsmeldung 700 dabei vor, während oder nach dem Absenden einer Verfügbarkeitsmeldung 700 durch den Dienst selbst, den Teilnehmer-Nachrichtenvermittler im Kommunikationsteilnehmer oder die an den Kommunikationsteilnehmer angeschlossene Vermittlungsbrücke in das Thema der Verfügbarkeitsmeldung 700 als einzelne zweite Themenebene oder eine Folge von zweite Themenebenen eingefügt werden.

Die Teilnehmeridentifikation muss in der Verfügbarkeitsmeldung 700 jedoch nicht in Form einer Themenebene angezeigt werden, sondern kann auch durch den Nachrichteninhalt der Verfügbarkeitsmeldung 700 dargestellt werden, wie in Figur 5 gezeigt ist.

Eine dritte Themenebene, die auf die zweite Themenebene im ersten Themenbaumausschnitt 1025 folgt, weist ein siebzehntes Themenelement "[svns]" 1005 auf. Auf der dritten Themenebene können aber eine Vielzahl von Themenelemente angeordnet sein. Der Platzhalter 471 "[svns]" im siebzehnten Themenelement "[svns]" 1005 steht für "Dienstnamensraum" (service namespace) und ermöglicht es, dass derselbe Wert für eine Dienstbezeichnung für unterschiedliche Dienste genutzt werden kann, selbst wenn diese Dienste direkt mit einer Kommunikationsverbindung mit demselben Teilnehmer-Nachrichtenvermittler oder Nachrichtenvermittler 801.

Jedem Kommunikationsteilnehmer kann ein eindeutig den Kommunikationsteilnehmer bezeichnenden Wert für den Platzhalter 471 "[svns]" zugeordnet werden. Den Kommunikationsteilnehmer können dann autonom und ohne gegenseitige Koordination Dienstbezeichnungen den Diensten des Kommunikationsteilnehmers zuordnen, die auch identisch sein können. Die Applikationen können die Dienste der unterschiedlichen Kommunikationsteilnehmer an dem Wert für den Platzhalter 471 "[svns]" in den Themenelementen der dritten Themenebene unterscheiden.

Das Vorsehen der dritten Themenebene im ersten Themenbaumausschnitt 1025 ist insbesondere dann vorteilhaft, wenn Dienste in sogenannten Containern, das heißt ausführbare Einheiten bereitgestellt werden und vom Betreiber eines Kommunikationsteilnehmers in einer Ausführungsumgebung für Container-Instanzen innerhalb des Kommunikationsteilnehmers ausgeführt werden. Der Betreiber des Kommunikationsteilnehmers ist nämlich in der Regel beschränkt in den Möglichkeiten, was den Wert für die Dienstbezeichnungen der Dienste innerhalb der vom Betreiber eingesetzten Container betrifft.

Das achtzehnte Themenelemente "s" 1006 und das neunzehnte Themenelement "p" 1007 der vierten Themenebene, die auf die dritte Themenebene im ersten Themenbaumausschnitt 1025 folgt, geben jeweils eine Dienstbezeichnung an. Bei dem in Figur 8 gezeigten Automatisierungssystem 800 werden ausschließlich die Werte "s" und "p" für die Dienstbezeichnungen verwendet. Die Dienstbezeichnung steht dabei für eine Diensttyp 711 wie beispielsweise eine Datenbank, ein Dateisystem oder eine programmierbare Steuerung und ist innerhalb des Automatisierungssystems 800, wie bereits erläutert, nicht eindeutig.

Wenn beispielsweise der Wert der ersten Teilnehmeridentifikation 832 für den ersten Teilnehmer-Nachrichtenvermittler 802 im ersten Kommunikationsteilnehmer 806 "ipc4711.example.com" ist und für das sechzehnte Themenelement "[clid]" 1004 anstelle der zweite Themenebene im ersten Themenbaumausschnitt 1025 in mehrere Themenelemente in nacheinander folgenden Themenebenen aufgeteilt eingesetzt wird, kann das Thema einer Verfügbarkeitsmeldung 700 für den ersten Dienst 860, der als erste Dienstbezeichnung 870 den Buchstaben "s" hat, formuliert nach dem Standard "MQTT-Version 5.0", "m/sv/com/example/ipc4711/dm/s" lauten. Für den Platzhalter 471 "[svns]" in dem siebzehnte Themenelement "[svns]" 1005 der dritten Themenebene ist dabei der Wert "dm" eingesetzt, der für "device management" steht. An einer solchen Ausgestaltung der Themen für Verfügbarkeitsmeldungen 700 ist vorteilhaft, dass Applikationen leicht die Verfügbarkeitsmeldungen 700 von Gruppen von Diensten einer Internet-Domain abonnieren können, beispielsweise mit dem Themenfilter "m/sv/com/example/#".

Wenn die erste Teilnehmeridentifikation 832 in einer einzelnen Themenebene mit dem Wert "ipc4711.example.com" dargestellt wird, dann lautet das Thema für eine Verfügbarkeitsmeldung 700 "m/sv/ipc4711.example.com/dm/s". Mit so ausgestalteten Verfügbarkeitsmeldungen 700 können einfach Applikationen die Verfügbarkeitsmeldungen 700 von Diensten eines bestimmten Dienstnamensraumes in dem Automatisierungssystem 800 abonnieren können, beispielsweise mit dem Themenfilter 451 "m/sv/+/dm/+".

Die Vermittlungsbrücken des Automatisierungssystems 800 nutzen Listen von Abonnements und Übersetzungstabellen. Mit Hilfe der Abonnements können die Vermittlungsbrücken Themen bei den mit den Vermittlungsbrücken verbundenen Nachrichtenvermittlern abonnieren, die durch die Vermittlungsbrücken weitergeleitet werden sollen. Die Übersetzungstabellen ermöglichen es den Vermittlungsbrücken, Thema oder Antwortthema 481 vor, während oder nach der Übermittlung gegebenenfalls zu verändern.

Figur 11 zeigt beispielhaft eine erste Gruppe 1200 von zwei Sätzen mit jeweils einer Abonnementliste und jeweils zwei Übersetzungstabellen für die erste Vermittlungsbrücke 810 im Automatisierungssystem 800, die die erste Brückenbezeichnung "e" 820 trägt.

Ein erster Satz 1201 weist eine erste Abonnementliste 1211 sowie eine erste Übersetzungstabelle 1212 und eine zweite Übersetzungstabelle 1213 auf. Die erste Abonnementliste 1211 umfasst Themenfilter, die die erste Vermittlungsbrücke 810 beim Nachrichtenvermittler 801 abonniert. Die erste Übersetzungstabelle 1212 umfasst Übersetzungsregeln für Themen von Nachrichten, die mit Hilfe der Abonnements der ersten Abonnementliste 1211 durch die erste Vermittlungsbrücke 810 vom Nachrichtenvermittler 801 zur Weiterleitung an den ersten Teilnehmer-Nachrichtenvermittler 802 empfangen werden.

Die zweite Übersetzungstabelle 1213 umfasst Übersetzungsregeln für Antwortthemen 481 von Nachrichten, die mit Hilfe der Abonnements der ersten Abonnementliste 1211 durch die erste Vermittlungsbrücke 810 vom Nachrichtenvermittler 801 zur Weiterleitung an den ersten Teilnehmer-Nachrichtenvermittler 802 empfangen werden.

Analog umfasst ein zweiter Satz 1202 eine zweite Abonnementliste 1221 sowie eine dritte Übersetzungstabelle 1222 und eine vierte Übersetzungstabelle 1223. Die zweite Abonnementliste 1221 umfasst Themenfilter, die die erste Vermittlungsbrücke 810 beim ersten Teilnehmer-Nachrichtenvermittler 802 abonniert.

Die dritte Übersetzungstabelle 1222 umfasst Übersetzungsregeln für Themen von Nachrichten, die mit Hilfe der Abonnements der zweiten Abonnentenliste 1221 durch die erste Vermittlungsbrücke 810 vom ersten Teilnehmer-Nachrichtenvermittler 802 zur Weiterleitung an den Nachrichtenvermittler 801 empfangen werden.

Die vierte Übersetzungstabelle 1223 umfasst Übersetzungsregeln für Antwortthemen 482 von Nachrichten, die mit Hilfe der Abonnements der zweiten Abonnementliste 1223 durch die erste Vermittlungsbrücke 810 vom ersten Teilnehmer-Nachrichtenvermittler 802 zur Weiterleitung an den Nachrichtenvermittler 801 empfangen werden.

Die erste Abonnementliste 1211 weist eine erste Zeile mit einem ersten Themenfilter "m/#" 1231 und eine zweite Zeile mit einem zweiten Themenfilter "d/e/#" 1232 auf. Der erste Themenfilter "m/#" 1231 bewirkt, dass die erste Vermittlungsbrücke 810 alle Verfügbarkeitsmeldungen 700 weiterleitet, die beim Nachrichtenvermittler 801 publiziert werden. Der zweite Themenfilter "d/e/#" 1232 bewirkt, dass alle Anforderungsnachrichten 740 und Antwortnachrichten 780 von der ersten Vermittlungsbrücke 810 empfangen werden, die beim Nachrichtenvermittler 801 publiziert werden und über die erste Vermittlungsbrücke 810 weitergeleitet werden sollen.

Die erste Übersetzungstabelle 1212 umfasst eine erste Zeile mit einem dritte Themenfilter "m/#" 1233 sowohl auf der ersten Eingangsseite "in" 1261 als auch auf der ersten Ausgangseite "out" 1262, was bewirkt, dass das Thema von Verfügbarkeitsmeldungen 700 unverändert von der erste Vermittlungsbrücke 810 an den ersten Teilnehmer-Nachrichtenvermittler 802 weitergeleitet wird.

Die erste Übersetzungstabelle 1212 weist weiter eine zweite Zeile mit einem vierten Themenfilter "d/e//#" auf der ersten Eingangsseite "in" 1261 und einem fünfte Themenfilter "l/#" auf der ersten Ausgangseite "out" 1262 auf. Mit der Regel der zweiten Zeile der ersten Übersetzungstabelle 1212 wird bewirkt, dass die erste Vermittlungsbrücke 810 den Zustellweg aus dem Thema von Nachrichten bei der Weiterleitung vom Nachrichtenvermittler 801 an den ersten Teilnehmer-Nachrichtenvermittler 802 den Zustellweg entfernt und durch die zweite Wurzel "l" 1102 ersetzt. Die zweite Wurzel "l" 1102 zeigt dabei Dienste oder Applikationen an, die das Thema abonniert haben, eine direkte Kommunikationsverbindung zum Teilnehmer-Nachrichtenvermittler besitzen, was beim ersten Dienst 860 im ersten Kommunikationsteilnehmer 860 in Bezug auf den ersten Teilnehmer-Nachrichtenvermittler 802 gegeben ist.

Ferner umfasst die erste Übersetzungstabelle 1212 eine dritte Zeile mit einem sechsten Themenfilter "d/e/#" 1236 auf der ersten Eingangsseite "in" und einem siebten Themenfilter "d/#" 1237 auf der ersten Ausgangseite "out" 1262. Mit der Regel der dritten Zeile der ersten Übersetzungstabelle 1212 wird bewirkt, dass Zustellwege im Thema von Nachrichten um die Brückenbezeichnung "e" 820 der ersten Vermittlungsbrücke 810 von der der ersten Vermittlungsbrücke 810 bei der Weiterleitung vom Nachrichtenvermittler 801 an den ersten Teilnehmer-Nachrichtenvermittler 802 reduziert werden, die bei der Publikation im ersten Teilnehmer-Nachrichtenvermittler 802 noch nicht am Ziel wären und noch über mindestens einen Wegabschnitt weitergeleitet werden müssen. Diese ist für den ersten Kommunikationsteilnehmer 806 überflüssig, weil dieser nur über eine Vermittlungsbrücke verfügt.

Die zweite Übersetzungstabelle 1213 weist eine erste Zeile mit einem achten Themenfilter "l/#" 1238 auf der zweiten Eingangsseite "in" 1263 und einem neunten Themenfilter "d/e//#" 1239 auf der zweiten Ausgangseite "out" 1264 auf. Mit der ersten Zeile erhält das Antwortthema 481 von Nachrichten einen Zustellweg, wenn beim Nachrichtenvermittler 801 durch einen direkt mit ihm verbundenen Dienst oder einer direkt mit ihm verbundenen Applikation publiziert wurde. Im Automatisierungssystem 800 sind mit dem Nachrichtenvermittler 801 keine Dienste oder Applikationen direkt verbunden, weshalb die Regel nicht benötigt wird.

Die zweite Übersetzungstabelle 1213 umfasst weiter eine zweite Zeile mit einem zehnten Themenfilter "d/#" 1240 auf der zweiten Eingangsseite "in" 1263 und einem elften Themenfilter "d/e/#" 1241 auf der zweiten Ausgangseite "out" 1264. Die Regel der zweiten Zeile der zweiten Übersetzungstabelle 1213 bewirkt, dass der Zustellweg im Antwortthema 481 von Nachrichten um die Brückenbezeichnung "e" 820 verlängert wird. Bei dem Automatisierungssystem 800 ergänzt die erste Vermittlungsbrücke 810 so das Antwortthema 481 von Nachrichten bei der Weiterleitung vom Nachrichtenvermittler 801 zum ersten Teilnehmer-Nachrichtenvermittler 802.

Die in Figur 11 gezeigten ersten Satz 1201 und zweiten Satz 1202 mit Abonnementlisten und Übersetzungstabellen bilden die beiden Übertragungsrichtungen von Nachrichten durch die erste Vermittlungsbrücke 810 im Automatisierungssystem 800 ab. Der erste Satz 1201 steht für die Nachrichten-Weiterleitung vom Nachrichtenvermittler 801 zum ersten Teilnehmer-Nachrichtenvermittler 802 über die erste Vermittlungsbrücke 810. Der zweite Satz 1202 gilt dann für die umgekehrte Richtung der Nachrichten-Weiterleitung vom ersten Teilnehmer-Nachrichtenvermittler 802 zum Nachrichtenvermittler 801 über die erste Vermittlungsbrücke 810.

Die zweite Abonnementliste 1221, die dritte Übersetzungstabelle 1222 und die vierte Übersetzungstabelle 1223 des zweiten Satzes 1202 und die erste Abonnementliste 1211, die erste Übersetzungstabelle 1212 und die zweite Übersetzungstabelle 1213 des ersten Satzes 1201 weisen einen identischen Inhalt auf. Ein Unterschied besteht jedoch beim Einsatz im Automatisierungssystem 800.

Die zweite Abonnementliste 1221, die die Abonnements der ersten Vermittlungsbrücke 810 bei dem ersten Teilnehmer-Nachrichtenvermittler 802 anzeigt, umfasst wie die erste Abonnementliste 1221, die die Abonnements der erste Vermittlungsbrücke 810 bei dem Nachrichtenvermittler 801 anzeigt, eine erste Zeile mit einem zwölften Themenfilter "m/#" 1242 und eine zweite Zeile mit einem dreizehnten Themenfilter "d/e/#" 1243.

Die dritte Übersetzungstabelle 1222 weist eine erste Zeile mit einem vierzehnten Themenfilter "m/#" 1244 sowohl auf der dritten Eingangsseite "in" 1265 als auch auf der dritten Ausgangseite "out" 1266, was bewirkt, dass das Thema von Verfügbarkeitsmeldungen 700 unverändert von der erste Vermittlungsbrücke 810 an den Nachrichtenvermittler 801 weitergeleitet wird.

Die dritte Übersetzungstabelle 1222 umfasst weiter eine zweite Zeile mit einem fünfzehnten Themenfilter "d/e//#" 1245 auf der dritten Eingangsseite "in" 1265 und einem sechszehnten Themenfilter "l/#" 1246 auf der dritten Ausgangseite "out" 1266. Die Regel der zweiten Zeile der dritten Übersetzungstabelle 1222 wird im Automatisierungssystem 800 im Gegensatz zur Regel der zweiten Zeile der ersten Übersetzungstabelle 1212 nicht benötigt, da mit dem Nachrichtenvermittler 801 keine Dienste oder Applikationen direkt verbunden sind, welche für die Themen ihrer Nachrichten und ihre Abonnements dort die zweite Wurzel "l" 1102 verwenden würden.

Ferner weist die dritte Übersetzungstabelle 1222 eine dritte Zeile mit einem siebzehnten Themenfilter "d/e/#" 1247 auf der dritten Eingangsseite "in" 1265 und einem achtzehnten Themenfilter "d/#" 1248 auf der dritten Ausgangseite "out" 1266 auf. Mit der Regel der dritten Zeile der dritten Übersetzungstabelle 1222 wird bewirkt, dass Zustellwege im Thema von Nachrichten um die erste Brückenbezeichnung "e" 820 der ersten Vermittlungsbrücke 810 von der ersten Vermittlungsbrücke 810 bei der Weiterleitung von dem ersten Teilnehmer-Nachrichtenvermittler 802 an den Nachrichtenvermittler 801 reduziert werden.

Die vierte Übersetzungstabelle 1223 umfasst eine erste Zeile mit einem neunzehnten Themenfilter "l/#" 1249 auf der vierten Eingangsseite "in" 1267 und einem zwanzigsten Themenfilter "d/e//#" 1250 auf der vierten Ausgangseite "out" 1268. Mit der Regel der ersten Zeile der vierten Übersetzungstabelle 1223 erhält das Antwortthema 481 von Nachrichten einen Zustellweg, wenn diese beim ersten Teilnehmer-Nachrichtenvermittler 802 durch den direkt verbundenen Dienst 860 publiziert wurde. Die Regel bewirkt, dass die erste Vermittlungsbrücke 810 die zweite Wurzel "l" 1102 zur zweiten Wurzel "d" 1103 ändert, um anzuzeigen, dass das Anwortthema von Nachrichten einen Zustellweg erhält, wobei zusätzlich die erste Brückenbezeichnung "e" 820 und das Ende der Rückwegbeschreibung mit einer leeren Wegabschnittsbezeichnung eingetragen werden. Die Regel der ersten Zeile der dritte Übersetzungstabelle 1222 wird Automatisierungssystem 800 im Gegensatz zur Regel der ersten Zeile der zweiten Übersetzungstabelle 1213 also verwendet, zum Beispiel für Verfügbarkeitsmeldungen als auch Antwortnachrichten.

Die vierte Übersetzungstabelle 1223 weist weiter eine zweite Zeile mit einem einundzwanzigsten Themenfilter "d/#" 1251 auf der vierte Eingangsseite "in" 1267 und einem zweiundzwanzigsten Themenfilter "d/e/#" 1252 auf der Ausgangseite "out" 1268 auf. Die Regel der zweiten Zeile der vierten Übersetzungstabelle 1223, die bewirkt, dass der Zustellweg in dem Antwortthema 481 von Nachrichten um die erste Brückenbezeichnung "e" 820 verlängert wird, wird im Automatisierungssystem 800 im Gegensatz zur Regel der zweiten Zeile der zweiten Übersetzungstabelle 1213 nicht benötigt, da die im ersten Teilnehmer-Nachrichtenvermittler 802 durch Dienste publizierte Antwortnachrichten 780 im Antwortthema 481 keinen Zustellweg enthalten.

Alle Gruppen aus zwei Sätzen mit je einer Abonnementliste und je zwei Übersetzungstabellen, die einer Vermittlungsbrücke im Automatisierungssystem 800 zugeordnet sind, haben denselben Aufbau, wie in Figur 11 für die erste Vermittlungsbrücke 810 erläutert ist. Was den Inhalt betrifft, ist jedoch statt der ersten Brückenbezeichnung "e" der erste Vermittlungsbrücke 810 die der entsprechenden Vermittlungsbrücke zugeordnete Brückenbezeichnung eingetragen.

Die Sätze mit Abonnementlisten und Übersetzungstabellen müssen also für die einzelnen Vermittlungsbrücken nicht vorkonfiguriert werden. Die Vermittlungsbrücke kann die Abonnementlisten und Übersetzungstabellen durch Einfügen der Brückenbezeichnung eigenständig generieren. Für die Konfiguration einer Vermittlungsbrücke bedarf es ausschließlich der Festlegung, zwischen welchen beiden Nachrichtenvermittlern die Vermittlungsbrücke eine Kommunikationsverbindung bildet und welche Brückenbezeichnung der Vermittlungsbrücke zugeordnet ist.

Figur 12 zeigt im Automatisierungssystem 800 aus Figur 8 den Vorgang, wenn im dritten Kommunikationsteilnehmer 808 eine Vierter-Dienst-Verfügbarkeitsmeldung 1804 von dem vierten Dienst 863 bei dem direkt mit dem Dienst verbundenen dritten Teilnehmer-Nachrichtenvermittler 804 publiziert wird. Die Vierter-Dienst-Verfügbarkeitsmeldung 1804 ist dabei entsprechend der in Figur 5 gezeigten Verfügbarkeitsmeldung 700 aufgebaut und besitzt den optionalen einmaligen Wert 704.

Der dritte Teilnehmer-Nachrichtenvermittler 804 stellt eine unveränderte erste Nachrichtenkopie 1806 der Vierter-Dienst-Verfügbarkeitsmeldung 1804 an die direkt mit dem dritten Teilnehmer-Nachrichtenvermittler 804 verbundenen ersten Applikation 864 und zweiten Applikationen 865 zu, falls diese entsprechende Abonnements eingerichtet haben.

Eine zweite Nachrichtenkopie 1801 der Vierter-Dienst-Verfügbarkeitsmeldung 1804 wird durch den dritten Teilnehmer-Nachrichtenvermittler 804 über die dritte Vermittlungsbrücke 812 an den Nachrichtenvermittler 801 des Automatisierungssystems 800 weitergeleitet, wobei Thema und Antwortthema 481 in der zweiten Nachrichtenkopie 1801 der Vierter-Dienst-Verfügbarkeitsmeldung 1804 entsprechend den Übersetzungstabellen der dritte Vermittlungsbrücke 812 bearbeitet werden. Dabei erhält das Antwortthema 481 eine Rückwegbeschreibung, die die Wegabschnittsbezeichnung der dritten Vermittlungsbrücke 812 umfasst. Das Thema dagegen bleibt unverändert. Die dritte Vermittlungsbrücke 812 speichert weiter den einmaligen Wert 704 aus der zweiten Nachrichtenkopie 1801 ab.

Der Nachrichtenvermittler 801 übermittelt dann basierend auf der zweiten Nachrichtenkopie 1801 eine dritte Nachrichtenkopie 1802 der Vierter-Dienst-Verfügbarkeitsmeldung 1804 über die erste Vermittlungsbrücke 810 an den ersten Teilnehmer-Nachrichtenvermittler 802, eine vierte Nachrichtenkopie 1803 der Vierter-Dienst-Verfügbarkeitsmeldung 1804 über die zweite Vermittlungsbrücke 811 an den zweiten Teilnehmer-Nachrichtenvermittler 803 und eine fünfte Nachrichtenkopie 1805 der Vierter-Dienst-Verfügbarkeitsmeldung 1804 über die vierte Vermittlungsbrücke 813 an den vierten Teilnehmer-Nachrichtenvermittler 805.

Bei der Zustellung der jeweiligen Nachrichtenkopie an den Teilnehmer-Nachrichtenvermittler bearbeitet die Vermittlungsbrücke entsprechend der zugeordneten Übersetzungstabelle das Thema beziehungsweise das Antwortthema 481, wobei die Rückwegbeschreibung im Antwortthema 481 um die Wegabschnittsbezeichnung der jeweiligen Vermittlungsbrücke erweitert wird, während das Thema unverändert bleibt. Die Vermittlungsbrücke speichert außerdem jeweils den einmaligen Wert 704 aus der Nachrichtenkopie.

Die dritte Vermittlungsbrücke 812 ignoriert dagegen das Abonnement auf Verfügbarkeitsmeldung 700 vom Nachrichtenvermittler 801, weil der dritte Vermittlungsbrücke 812 der einmaligen Wert 704 aus der zweiten Nachrichtenkopie 1801 bereits bekannt ist.

Auch die dritten Nachrichtenkopie 1802, vierten Nachrichtenkopie 1803 und fünften Nachrichtenkopie 1805 werden wiederum von ersten Teilnehmer-Nachrichtenverteiler 802, zweiten Teilnehmer-Nachrichtenverteiler 803 und vierten Teilnehmer-Nachrichtenvermittlern 805 den zugeordneten Vermittlungsbrücken rückgekoppelt, weil die Vermittlungsbrücken jeweils ein Abonnement auf Verfügbarkeitsmeldung 700 bei den Teilnehmer-Nachrichtenvermittler eingerichtet haben. Die Vermittlungsbrücken übertragen die Nachrichtenkopien aber nicht weiter zum Nachrichtenvermittler 801, da den Vermittlungsbrücken der einmalige Wert 704 aus den dritten Nachrichtenkopie 1802, vierten Nachrichtenkopie 1803 und fünften Nachrichtenkopien 1805 bereits bekannt ist.

Eine Rückkopplung durch wiederholtes und multipliziertes Übertragen von Nachrichtenkopien wird so unterbunden, weil die Verwendung des einmaligen Wertes 704 in der Verfügbarkeitsmeldung 700 die Erkennung bereits übertragener Nachrichtenkopien ermöglicht.

Figur 13 zeigt im Automatisierungssystem 800 aus Figur 8 den Vorgang, beim dem sowohl die erste Applikation 864 im dritten Kommunikationsteilnehmer 808 mit einer Erste-Applikation-Anforderungsnachricht 1904 auf die Zustellung der fünfte Nachrichtenkopie 1805 der Vierter-Dienst-Verfügbarkeitsmeldung 1804 von dem vierten Dienst 863 im dritten Kommunikationsteilnehmer 808 als auch die dritten Applikation 866 im vierten Kommunikationsteilnehmer 809 mit einer Dritte-Applikation-Anforderungsnachricht 1901 auf die Zustellung der fünfte Nachrichtenkopie 1805 der Vierter-Dienst-Verfügbarkeitsmeldung 1804 von dem vierten Dienst 863 im dritten Kommunikationsteilnehmer 808 reagiert. Auf Verfügbarkeitsmeldungen müssen aber grundsätzlich keine Reaktionen erfolgen.

Die Erste-Applikation-Anforderungsnachricht 1904 und die Dritte-Applikation-Anforderungsnachricht 1901 sind dabei entsprechend der in Figur 6 gezeigten Anforderungsnachricht 740 aufgebaut.

Die erste Applikation 864 und die dritte Applikation 866 verwenden in der Ersten-Applikation-Anforderungsnachricht 1901 beziehungsweise der Dritten-Applikation-Anforderungsnachricht 1904 als Thema jeweils das Antwortthema 481 der fünften Nachrichtenkopie 1805 beziehungsweise der ersten Nachrichtenkopie 1806. Die Rückwegbeschreibung des Antwortthemas 481 dient dabei als Zustellweg im Thema.

Die erste Applikation 864 publiziert die Erste-Applikation-Anforderungsnachricht 1904 bei dem direkt verbundenen dritten Teilnehmer-Nachrichtenvermittler 804 im dritten Kommunikationsteilnehmer 808. Ferner publiziert die dritte Applikation 866 die Dritte-Applikation-Anforderungsnachricht 1901 bei dem direkt verbundenen vierten Teilnehmer-Nachrichtenvermittler 805 im vierten Kommunikationsteilnehmer 809.

Der dritten Teilnehmer-Nachrichtenvermittler 804 überträgt dann die Erste-Applikation-Anforderungsnachricht 1904 als unveränderte erste Nachrichtenkopie 1905 an den vierten Dienst 863, da die erste Applikation 864 und der vierten Dienst 863 als Teil des dritten Kommunikationsteilnehmer 808 direkt mit dem dritten Teilnehmer-Nachrichtenvermittler 804 verbunden sind.

Die mit dem dritten Teilnehmer-Nachrichtenvermittler 804 verbundene dritte Vermittlungsbrücke 812 leitet die Erste-Applikation-Anforderungsnachricht 1904 aber nicht weiter, weil die dritte Vermittlungsbrücke 812 keinen auf das Thema der Erste-Applikation-Anforderungsnachricht 1904 passenden Themenfilter 451 beim dritten Teilnehmer-Nachrichtenvermittler 804 abonniert hat.

Der vierte Teilnehmer-Nachrichtenvermittler 805 im vierten Kommunikationsteilnehmer 809 übermittelt über die vierte Vermittlungsbrücke 813 eine sechste Nachrichtenkopie 1902 der Dritte-Applikation-Anforderungsnachricht 1901 an den Nachrichtenvermittler 801, da die dritte Vermittlungsbrücke 812 einen auf das Thema der Vierte-Applikation-Anforderungsnachricht 1904 passenden Themenfilter 451 beim dritten Teilnehmer-Nachrichtenvermittler 804 abonniert hat. Dabei wird der Wert des Zustellweges im Thema der sechste Nachrichtenkopie 1902 der Dritte-Applikation-Anforderungsnachricht 1901 bei der Übertragung zum Nachrichtenvermittler 801 um die Wegabschnittsbezeichnung der vierten Vermittlungsbrücke 813 reduziert.

Im Gegensatz zu einer Verfügbarkeitsmeldung 700 wird die sechste Nachrichtenkopie 1902 der Dritte-Applikation-Anforderungsnachricht 1901 durch den zentralen Teilnehmer-Nachrichtenvermittler 801 nur über die dritte Vermittlungsbrücke 812 weitergegeben, da die weiteren Vermittlungsbrücken keine zu dem Zustellweg im Thema der sechste Nachrichtenkopie 1902 der Dritte-Applikation-Anforderungsnachricht 1901 passende Themenfilter 451 beim Nachrichtenvermittler 801 abonniert haben.

Die dritte Vermittlungsbrücke 812 übergibt dann eine siebte Nachrichtenkopie 1903 der Dritte-Applikation-Anforderungsnachricht 1901 dem dritten Teilnehmer-Nachrichtenvermittler 804 im dritten Kommunikationsteilnehmer 806. Der Wert des Zustellweges im Thema der siebten Nachrichtenkopie 1903 der Dritte-Applikation-Anforderungsnachricht 1901 wird bei der Übertragung zum dritten Teilnehmer-Nachrichtenvermittler 804 um die Wegabschnittsbezeichnung der dritten Vermittlungsbrücke 812 reduziert und ist, da die Dritte-Applikation-Anforderungsnachricht 1901 den dritten Teilnehmer-Nachrichtenvermittler 804, der mit dem den vierten Dienst 863 im dritten Kommunikationsteilnehmer 808 direkt verbunden ist, erreicht hat, dann leer beziehungsweise nicht mehr vorhanden.

Der dritten Teilnehmer-Nachrichtenvermittler 804 stellt anschließend die siebte Nachrichtenkopie 1903 dem mit dem dritten Kommunikationsteilnehmer 806 direkt verbundenen vierten Dienst 863 zu.

Die vorstehende Erläuterung zeigt, dass für Anforderungsnachrichten 740 Rückkoppelungen durch Mehrfachübertragung von Anforderungsnachrichten 740 vermieden werden. Der Zustellweg im Thema der Anforderungsnachricht 740 sorgt mit Hilfe der unterschiedlichen Abonnements der Vermittlungsbrücken für eine Weiterleitung genau auf dem einem Weg.

Figur 14 zeigt im Automatisierungssystem 800 aus Figur 8 den Vorgang, wenn der vierte Dienst 863 im dritten Kommunikationsteilnehmer 808 auf die Zustellung der achten Nachrichtenkopie 1905 der Erste-Applikation-Anforderungsnachricht 1904 der ersten Applikation 864 im dritten Kommunikationsteilnehmer 808 mit einer ersten Vierter-Dienst-Antwortnachricht 2004 und auf die Zustellung der siebten Nachrichtenkopie 1903 der Dritte-Applikation-Anforderungsnachricht 1901 der dritten Applikation 866 im vierten Kommunikationsteilnehmer 809 mit einer zweiten Vierter-Dienst-Antwortnachricht 2001 reagiert.

Die ersten Vierter-Dienst-Antwortnachricht 2004 und zweiten Vierter-Dienst-Antwortnachricht 2001 sind dabei entsprechend der in Figur 7 gezeigten Antwortnachricht 780 aufgebaut.

**Wenn eine** Antwortnachricht 780 von einem Dienst erzeugt und publiziert wird, dann wird in der Antwortnachricht 780 analog zur Verfügbarkeitsmeldung 700 bei der Zustellung zur Applikation in der jeweils übertragenen Nachrichtenkopie von Vermittlungsbrücken entsprechend der ihr jeweils zugeordneten Übersetzungstabelle das Antwortthema 481 in der Antwortnachricht 780 verändert, wenn es in der Antwortnachricht 780 enthalten ist, und so die Rückwegbeschreibung erfasst, welche von der Applikation als neuer Wert für weitere Anforderungsnachrichten 740 genutzt werden kann.

Der vierte Dienst 863 verwenden beim Versenden einer Antwortnachricht 780 das Antwortthema 481 der achten Nachrichtenkopie 1905 der Erste-Applikation-Anforderungsnachricht 1904 als Thema für die erste Vierter-Dienst-Antwortnachricht 2004 und das Antwortthema 481 der siebte Nachrichtenkopie 1903 der Dritte-Applikation-Anforderungsnachricht 1901 als Thema für die zweite Vierter-Dienst-Antwortnachricht 2001.

Die Anforderungsnachricht 740 kann ferner Korrelationsdaten enthalten. Der Dienst kopiert dann die Korrelationsdaten aus der jeweiligen Anforderungsnachricht 740 in die Antwortnachricht 780 und der Kommunikationsteilnehmer kann nach Erhalt der Antwortnachricht 780 zuordnen, zu welcher Anforderungsnachricht 740 die Antwortnachricht 780 gehört.

Wie Figur 14 zeigt, publiziert der vierte Dienst 863 im dritten Kommunikationsteilnehmer 808 die erste Vierter-Dienst-Antwortnachricht 2004 bei dem direkt mit dem Dienst verbundenen dritten Teilnehmer-Nachrichtenvermittler 804. Der dritte Teilnehmer-Nachrichtenvermittler 804 stellt dann gemäß eine unveränderte neunte Nachrichtenkopie 2005 der ersten Vierter-Dienst-Antwortnachricht 2004 an die direkt mit dem dritten Teilnehmer-Nachrichtenvermittler 804 verbundene erste Applikation 864 zu, da ein entsprechendes Abonnement der erste Applikation 864 beim dritten Teilnehmer-Nachrichtenvermittler 804 vorliegt.

Die mit dem dritten Teilnehmer-Nachrichtenvermittler 804 verbundene dritte Vermittlungsbrücke 812 leitet die erste Vierter-Dienst-Antwortnachricht 2004 aber nicht weiter, weil die dritte Vermittlungsbrücke 812 keinen auf das Thema der erste Vierter-Dienst-Antwortnachricht 2004 passenden Themenfilter 451 beim dritten Teilnehmer-Nachrichtenvermittler 804 abonniert hat.

Wie Figur 14 weiter zeigt, publiziert der vierte Dienst 863 im dritten Kommunikationsteilnehmer 808 auch die zweite Vierter-Dienst-Antwortnachricht 2004 bei dem direkt mit dem Dienst verbundenen dritten Teilnehmer-Nachrichtenvermittler 804. Da im der Themenbaum des dritten Teilnehmer-Nachrichtenvermittlers 804 kein passendes Abonnement der erste Applikationen 864 oder der zweiten Applikationen 865 vorliegt, stellt der dritte Teilnehmer-Nachrichtenvermittler 804 dann aber keine Nachrichtenkopien der ersten Vierter-Dienst-Antwortnachricht 2004 an die direkt mit dem dritten Teilnehmer-Nachrichtenvermittler 804 verbundenen Applikationen zu.

Der dritte Teilnehmer-Nachrichtenvermittler 804 übermittelt aber über die dritte Vermittlungsbrücke 812 eine zehnte Nachrichtenkopie 2002 der zweiten Vierter-Dienst-Antwortnachricht 2001 an den Nachrichtenvermittler 801, da die dritte Vermittlungsbrücke 812 einen auf das Thema der zweiten Vierter-Dienst-Antwortnachricht 2001 passenden Themenfilter 451 beim dritten Teilnehmer-Nachrichtenvermittler 804 abonniert hat. Dabei wird der Wert des Zustellweges im Thema der zehnten Nachrichtenkopie 2002 der zweiten Vierter-Dienst-Antwortnachricht 2001 bei der Übertragung zum Nachrichtenvermittler 801 um die Wegabschnittsbezeichnung der dritten Vermittlungsbrücke 812 reduziert.

Der Nachrichtenvermittler 801 gibt dann die zehnte Nachrichtenkopie 2002 der zweiten Vierter-Dienst-Antwortnachricht 2001 an die vierte Vermittlungsbrücke 813 aus, da die vierte Vermittlungsbrücke 813 den Zustellweg im Thema der zehnten Nachrichtenkopie 2002 der zweiten Vierter-Dienst-Antwortnachricht 2001 beim Nachrichtenvermittler 801 abonniert hat. Über die weiteren, mit dem Nachrichtenvermittler 801 verbundenen Vermittlungsbrücken werden keine Nachrichtenkopien der zweiten Vierter-Dienst-Antwortnachricht 2001 weitergeleitet, da kein entsprechendes Abonnement auf dem Zustellweg im Thema vorliegt.

Der Wert des Zustellweges im Thema einer siebten Nachrichtenkopie 1903 der zweiten Vierter-Dienst-Antwortnachricht 2001 wird bei der Übertragung zum vierten Teilnehmer-Nachrichtenvermittler 805 um die Wegabschnittsbezeichnung der vierten Vermittlungsbrücke 813 reduziert und ist, da die zweite Vierter-Dienst-Antwortnachricht 2001 den vierten Teilnehmer-Nachrichtenvermittler 805, der mit dem Adressaten der zweiter Vierter-Dienst-Antwortnachricht 2001, der dritten Applikation 866 im vierten Kommunikationsteilnehmer 809 direkt verbunden ist, erreicht hat, dann leer beziehungsweise nicht mehr vorhanden.

Der vierte Teilnehmer-Nachrichtenvermittler 805 stellt anschließend die elfte Nachrichtenkopie 2003 der zweiten Vierter-Dienst-Antwortnachricht 2001 der dritten Applikation 866 im vierten Kommunikationsteilnehmer 809 zu.

Die vorstehende Erläuterung zeigt wiederum, dass auch bei den Antwortnachrichten 780 Rückkoppelungen durch Mehrfachübertragung vermieden werden. Der Zustellweg im Thema der Antwortnachricht 740 sorgt mit Hilfe der unterschiedlichen Abonnements der Vermittlungsbrücken für eine Weiterleitung genau auf dem einen Weg.

Was das anhand der Figuren 12 bis 14 erläutert Vorgehen betrifft, macht es keinen Unterschied, ob Vermittlerbezeichnungen oder Brückenbezeichnungen als Wegabschnittsbezeichnungen in den Themen beziehungsweise Antwortthemen 481 von Verfügbarkeitsmeldungen 700, Anforderungsnachrichten 740 und Antwortnachrichten 780 verwendet werden.

Bei einer Erweiterung des in Figur 8 gezeigten Automatisierungssystems 800 mit einem neuen Systemabschnitt, der zusätzliche Kommunikationsteilnehmer mit Diensten und Applikationen, Teilnehmer-Nachrichtenvermittler und Vermittlungsbrücken umfasst, kommen in den Themenbäumen neuen Themenbaumabschnitte hinzu, die durch die neuen Wegmöglichkeiten entstehen. Dabei benötigen nur die hinzugefügten Teile des Automatisierungssystems eine neue Konfiguration sowie der Teilnehmer-Nachrichtenvermittler oder Nachrichtenvermittler, an den der neue Systemabschnitt über eine neue Vermittlungsbrücke angeschlossen ist. Alle weiteren Teile des Automatisierungssystems bleiben unverändert. Hinzugefügte Teile müssen nicht an den Nachrichtenvermittler 801 angeschlossen werden, sie können an jeden Teilnehmer-Nachrichtenvermittler des bestehenden Automatisierungssystems 800 durch eine weitere Vermittlungsbrücke angeschlossen werden. Es ist sogar möglich, dass ein Kommunikationsteilnehmer mit seinem Teilnehmer-Nachrichtenvermittler die Aufgabe des Nachrichtenvermittlers 801 übernimmt, also auch am Nachrichtenvermittler 801 Dienste und Applikationen mit direkter Kommunikationsverbindung angeschlossen sein können.

Die vorstehend erläuterten Bildungsregel für die Themenbäume, Abonnementlisten und Übersetzungstabellen bewirken, dass automatisch eine Weiterleitung zum Nachrichtenvermittler oder Teilnehmer-Nachrichtenvermittler entsteht, an den der neue Systemabschnitt angeschlossen ist, weil Verfügbarkeitsmeldungen 700 von Diensten des neue Systemabschnitts über alle Nachrichtenvermittler 801 publiziert werden und damit weitere Rückwegbeschreibungen und Zustellwege gültig werden.

Grundsätzlich kann aber auch vorgesehen sein, in den Vermittlungsbrücken, die mit dem Nachrichtenvermittler verbunden sind, an den der neue Systemabschnitt über eine neue Vermittlungsbrücke angeschlossen ist, selektiv oder pauschal eine Weiterleitung von Verfügbarkeitsmeldungen 700 beziehungsweise Nachrichten zwischen alten und neuen Teilen des Automatisierungssystems 800 zu unterdrücken.

Bei Automatisierungssystems 800 mit einem Netzwerk von Nachrichtenvermittlern 801 bilden sich überlagernde Themenbäume, weil Verfügbarkeitsmeldungen 700 beziehungsweise Nachrichten auf unterschiedliche Wege übermittelt werden können. Es kann dann eine implizite Anpassung der Zustellwege bei Veränderung der Topologie beziehungsweise bei Verbindungsüberlastung erfolgen.

### Bezugszeichen

- 341: Nachricht

- 400: Themenbaum
- 410: viertes Themenelement
- 411: sechstes Themenelement
- 412: neuntes Themenelement
- 413: zehntes Themenelement
- 415: siebtes Themenelement
- 420: fünftes Themenelement
- 430: erstes Themenelement
- 431: achtes Themenelement
- 432: elftes Themenelement
- 433: zwölftes Themenelement
- 435: zweites Themenelement
- 436: dreizehntes Themenelement
- 437: vierzehntes Themenelement
- 438: drittes Themenelement
- 441: Themenname

- 451: Themenfilter

- 461: erster Ebenentrenner
- 462: zweiter Ebenentrenner
- 463: dritter Ebenentrenner
- 464: vierter Ebenentrenner
- 465: fünfter Ebenentrenner

- 471: Platzhalter

- 481: Antwortthema
- 482: Auftragsthema

- 491: Korrelationsinformation

- 700: Verfügbarkeitsmeldung
- 701: erste Metadaten
- 702: ersten Themennamen
- 704: einmalige Wert
- 710: erster Nachrichteninhalt
- 711: Diensttyp
- 712: Teilnehmeridentifikation
- 713: Dienstversion

- 720: erste Rückwegbeschreibung
- 721: erste Wegabschnittsbezeichnung
- 722: zweite Wegabschnittsbezeichnung
- 723: dritte Wegabschnittsbezeichnung
- 724: vierte Wegabschnittsbezeichnung
- 725: fünfte Wegabschnittsbezeichnung

- 730: zweite Rückwegbeschreibung

- 740: Anforderungsnachricht
- 741: zweite Metadaten
- 742: erster Zustellweg
- 743: zweite Rückwegbeschreibung
- 744: erste Korrelationsdaten

- 750: zweite Nachrichteninhalt

- 780: Antwortnachricht
- 781: dritte Metadaten
- 782: zweite Zustellweg
- 783: dritte Rückwegbeschreibung
- 784: zweite Korrelationsdaten
- 790: dritte Nachrichteninhalt

- 800: Automatisierungssystem
- 801: Nachrichtenvermittler
- 802: erste Teilnehmer-Nachrichtenvermittler
- 803: zweite Teilnehmer-Nachrichtenvermittler
- 804: dritte Teilnehmer- Nachrichtevermittler
- 805: vierte Teilnehmer-Nachrichtenvermittler

- 806: erstes Kommunikationsteilnehmer
- 807: zweites Kommunikationsteilnehmer
- 808: drittes Kommunikationsteilnehmer
- 809: viertes Kommunikationsteilnehmer
- 810: erste Vermittlungsbrücke
- 811: zweite Vermittlungsbrücke
- 812: dritte Vermittlungsbrücke
- 813: vierte Vermittlungsbrücke

- 820: erste Brückenbezeichnung e
- 821: zweite Brückenbezeichnung f
- 822: dritte Brückenbezeichnung g
- 823: vierte Brückenbezeichnung h

- 832: erste Teilnehmeridentifikation
- 833: zweite Teilnehmeridentifikation
- 834: dritte Teilnehmeridentifikation
- 835: vierte Teilnehmeridentifikation

- 842: erste Vermittlerbezeichnung
- 843: zweite Vermittlerbezeichnung
- 844: dritte Vermittlerbezeichnung
- 845: vierte Vermittlerbezeichnung

- 850: erste Kommunikationsverbindung
- 851: zweite Kommunikationsverbindung
- 852: dritte Kommunikationsverbindung
- 853: vierte Kommunikationsverbindung
- 854: fünfte Kommunikationsverbindung
- 855: sechste Kommunikationsverbindung
- 856: siebte Kommunikationsverbindung

- 860: erste Dienst
- 861: zweite Dienst
- 862: dritte Dienst
- 863: vierte Dienst
- 864: erste Applikation
- 865: zweite Applikation
- 866: dritte Applikation

- 870: erste Dienstbezeichnung
- 871: zweite Dienstbezeichnung
- 872: dritte Dienstbezeichnung
- 873: vierte Dienstbezeichnung
- 874: erste Applikationsbezeichnung
- 875: zweite Applikationsbezeichnung
- 876: dritte Applikationsbezeichnung

- 880: erste Objektsammlung
- 881: zweite Objektsammlung
- 882: dritte Objektsammlung
- 883: vierte Objektsammlung

- 1000: erster Themenbaum
- 1001: erste Wurzel m
- 1002: erste Wurzel d
- 1003: fünfzehntes Themenelement
- 1004: sechzehntes Themenelement
- 1005: siebzehntes Themenelement
- 1006: achtzehntes Themenelement
- 1007: neunzehntes Themenelement

- 1020: ersten Weg-Baumschicht
- 1021: zweite Themenbaumausschnitt
- 1022: dritte Themenbaumausschnitt
- 1023: vierte Themenbaumausschnitt
- 1024: fünfte Themenbaumausschnitt
- 1025: erste Themenbaumausschnitt

- 1031: erstes Weg-Themenelement e
- 1032: zweites Weg-Themenelement f
- 1033: drittes Weg-Themenelement g
- 1034: viertes Weg-Themenelement h
- 1035: erstes Stoppp-Themenelement
- 1036: zweites Stop-Themenelement
- 1037: drittes Stopp-Themenelement
- 1038: viertes Stopp-Themenelement

- 1100: zweiter Themenbaum
- 1101: zweite Wurzel m
- 1102: zweite Wurzel l
- 1103: zweite Wurzel d

- 1120: zweite Weg-Baumschicht
- 1121: sechste Themenbaumausschnitt
- 1122: siebte Themenbaumausschnitt
- 1123: achte Themenbaumausschnitt
- 1124: neunte Themenbaumausschnitt
- 1130: fünftes Weg-Themenelement e
- 1131: sechstes Weg-Themenelement f
- 1132: siebtes Weg-Themenelement g
- 1133: achtes Weg-Themenelement h

- 1141: fünftes Stopp-Themenelement
- 1142: sechstes Stopp-Themenelement
- 1143: siebtes Stopp-Themenelement

- 1200: erste Gruppe
- 1201: erster Satz
- 1202: zweite Satz

- 1211: erste Abonnementliste
- 1212: erste Übersetzungstabelle
- 1213: zweite Übersetzungstabelle

- 1221: zweite Abonnementliste
- 1222: dritte Übersetzungstabelle
- 1223: vierte Übersetzungstabelle

- 1231: erster Themenfilter "m/#"
- 1232: zweiter Themenfilter "d/e/#"
- 1233: dritter Themenfilter "m/#"
- 1234: vierter Themenfilter "d/e//#"
- 1235: fünfter Themenfilter "l/m"
- 1236: sechster Themenfilter
- 1237: siebte Themenfilter
- 1238: achte Themenfilter "l/#"
- 1239: neunte Themenfilter "d/e//#"
- 1240: zehnte Themenfilter "d/#"
- 1241: elfte Themenfilter "d/e/#"
- 1242: zwölfte Themenfilter "m/#"
- 1243: dreizehnte Themenfilter "d/e/#"
- 1244: vierzehnte Themenfilter "m/#"
- 1245: fünfzehnte Themenfilter "d/e//#"
- 1246: sechszehnte Themenfilter "l/#"
- 1247: siebzehnte Themenfilter "d/e/#"
- 1248: achtzehnte Themenfilter "d/#"
- 1249: neunzehnte Themenfilter "l/#"
- 1250: zwanzigste Themenfilter "d/e//#"
- 1251: einundzwanzigste Themenfilter "d/#"
- 1252: zweiundzwanzigste Themenfilter "d/e/#"

- 1261: erste Eingangsseite
- 1262: erste Ausgangseite
- 1263: zweite Eingangsseite
- 1264: zweite Ausgangseite
- 1265: dritte Eingangsseite
- 1266: dritte Ausgangseite
- 1267: vierte Eingangsseite
- 1268: vierte Ausgangseite

- 1801: zweite Nachrichtenkopie
- 1802: dritte Nachrichtenkopie
- 1803: vierte Nachrichtenkopie
- 1804: Vierter-Dienst-Verfügbarkeitsmeldung
- 1805: fünfte Nachrichtenkopie
- 1806: erste Nachrichtenkopie

- 1901: Dritte-Applikation-Anforderungsnachricht
- 1902: sechste Nachrichtenkopie
- 1903: siebte Nachrichtenkopie
- 1904: Erste-Applikations-Anforderungsnachricht
- 1905: achte Nachrichtenkopie

- 2001: zweite Vierter-Dienst-Antwortnachricht
- 2002: zehnte Nachrichtenkopie
- 2003: elfte Nachrichtenkopie
- 2004: erste Vierter-Dienst-Antwortnachricht
- 2005: neunte Nachrichtenkopie

## Patentansprüche

1. Automatisierungssystem (800) mit einer Kommunikationsinfrastruktur, die mehrere Kommunikationsteilnehmer aufweist, die jeweils über eine Kommunikationsverbindung mit wenigstens einem Nachrichtenvermittler (801) verbunden sind,
wobei die Kommunikationsteilnehmer ausgelegt sind, beim Nachrichtenvermittler (801) Nachrichten unter Themennamen (441) zu veröffentlichen beziehungsweise Nachrichten unter Themennamen (441) zu abonnieren,
wobei die Kommunikationsteilnehmer beim Nachrichtenvermittler (801) ein Abonnement auf Verfügbarkeitsmeldungen (700), die anzeigen, dass ein Kommunikationsteilnehmer einen Dienst bereitstellt, besitzen,
**dadurch gekennzeichnet, dass**
die Verfügbarkeitsmeldungen (700) jeweils erste Rückwegbeschreibung (720) aufweisen, die bei der Übertragung zwischen den Kommunikationsteilnehmern über die Kommunikationsverbindungen zum Nachrichtenvermittler (801) jeweils mit einer Wegabschnittsbezeichnung für den zurückgelegten Wegabschnitten erweitert wird,
wobei eine Interaktion zwischen den Kommunikationsteilnehmern erfolgt,
in dem wenigstens ein erster Kommunikationsteilnehmer (806), der Nachrichten unter einem ersten Themennamen (702) beim Nachrichtenvermittler (801) abonniert hat, eine Verfügbarkeitsmeldung (700) unter dem ersten Themennamen (702) beim Nachrichtenvermittler (801) veröffentlicht, die anzeigt, dass der erste Kommunikationsteilnehmer (806) einen dem ersten Themennamen (702) zugeordneten Dienst bereitstellt,
wobei jeder weitere Kommunikationsteilnehmer eine Nachrichtenkopie der Verfügbarkeitsmeldung (700) mit einer ersten Rückwegbeschreibung (720), die die Wegabschnittsbezeichnungen für die zurückgelegten Wegabschnitte ausgehend vom ersten Kommunikationsteilnehmer (806) umfasst, erhält,
in dem wenigstens ein zweiter Kommunikationsteilnehmer (807) eine Anforderungsnachricht (740) für den Dienst unter dem ersten Themennamen (702) beim Nachrichtenvermittler (801) veröffentlicht, wobei der zweite Kommunikationsteilnehmer (807) die erste Rückwegbeschreibung (703) der Nachrichtenkopie der Verfügbarkeitsmeldung (700) des Dienstes als den Zustellweg in der Anforderungsnachricht (700) an den ersten Kommunikationsteilnehmer (809) verwendet, wobei der Zustellweg der Anforderungsnachricht (740) bei der Übertragung vom zweiten Kommunikationsteilnehmer (807) zum ersten Kommunikationsteilnehmer (806) über die Kommunikationsverbindungen zum Nachrichtenvermittler (801) jeweils um die Wegabschnittsbezeichnung des zurückgelegten Wegabschnittes reduziert wird.

2. Automatisierungssystem (800) nach Anspruch 1,
wobei der zweite Kommunikationsteilnehmer (807) Nachrichten unter einem zweiten Themennamen beim Nachrichtenvermittler (801) abonniert hat,
wobei die Anforderungsnachricht (740) eine zweite Rückwegbeschreibung (730) aufweist, die bei der Übertragung vom zweiten Kommunikationsteilnehmer (807) zum ersten Kommunikationsteilnehmer (806) über die Kommunikationsverbindungen zum Nachrichtenvermittler (801) jeweils mit der Wegabschnittsbezeichnung des zurückgelegten Wegabschnittes erweitert wird, und
wobei der erste Kommunikationsteilnehmer (806) eine Antwortnachricht (780) von dem Dienst auf die Anforderungsnachricht (740) unter dem zweiten Themennamen (702) beim Nachrichtenvermittler (801) veröffentlicht,
wobei der erste Kommunikationsteilnehmer (806) die zweite Rückwegbeschreibung (730) der Anforderungsnachricht (740) als den Zustellweg in der Antwortnachricht (780) an den zweiten Kommunikationsteilnehmer (807) verwendet, wobei der Zustellweg der Antwortnachricht (740) bei der Übertragung vom ersten Kommunikationsteilnehmer (806) zum zweiten Kommunikationsteilnehmer (807) über die Kommunikationsverbindungen zum Nachrichtenvermittler (801) jeweils um die Wegabschnittsbezeichnung des zurückgelegten Wegabschnittes reduziert wird.

3. Automatisierungssystem (800) nach Anspruch 1 oder 2,
wobei die Verfügbarkeitsmeldung (700) erste Metadaten (701) und einen ersten Nachrichteninhalt (710) aufweisen,
wobei die ersten Metadaten (701) den ersten Themennamen (702), die erste Rückwegbeschreibung (720) und einen einmaligen Wert (704) umfassen, und
wobei der erste Nachrichteninhalt (710) einen Diensttyp (711) und optional eine Dienstversion (713) umfasst.

4. Automatisierungssystem (800) nach einem der Ansprüche 1 bis 3, wobei jeder Kommunikationsteilnehmer einen Teilnehmer-Nachrichtenvermittler umfasst, der über die zugeordnete Kommunikationsverbindung mit dem Nachrichtenvermittler (801) verbunden ist,
wobei jedem Teilnehmer-Nachrichtenvermittler eine Vermittlerbezeichnung zugeordnet, die den Teilnehmer-Nachrichtenvermittler eindeutig in Bezug auf die weiteren Teilnehmer-Nachrichtenvermittler kennzeichnet, die mit dem Nachrichtenvermittler (801) verbunden sind.

5. Automatisierungssystem (800) nach Anspruch 4,
wobei der Kommunikationsteilnehmer einen Dienst und/oder eine Applikation umfasst, die jeweils über eine Kommunikationsverbindung mit dem Teilnehmer-Nachrichtenvermittler des Kommunikationsteilnehmers verbunden sind, wobei der Dienst und/ oder die Applikation ausgelegt sind, beim Teilnehmer-Nachrichtenvermittler des Kommunikationsteilnehmers Nachrichten unter Themennamen (441)zu veröffentlichen beziehungsweise Nachrichten unter Themennamen (441) zu abonnieren.

6. Automatisierungssystem (800) nach Anspruch 5,
wobei im Kommunikationsteilnehmer jedem Dienst eine Dienstbezeichnung und jeder Applikation eine Applikationsbezeichnung zugeordnet ist, die den Dienst beziehungsweise die Applikation im Kommunikationsteilnehmer eindeutig bezeichnen.

7. Automatisierungssystem (800) nach einem der Ansprüche 1 bis 6, wobei die Kommunikationsverbindungen der Kommunikationsteilnehmer mit dem Nachrichtenvermittler (801) jeweils Vermittlungsbrücken sind,
wobei jede Vermittlungsbrücke eine Brückenbezeichnung zugeordnet ist, die die Vermittlungsbrücke eindeutig in Bezug auf die weiteren Vermittlungsbrücken kennzeichnet, die mit dem Nachrichtenvermittler (801) verbunden sind.

8. Automatisierungssystem (800) nach Anspruch 7, wobei die Vermittlungsbrücken Abonnements und Übersetzungstabellen besitzen, wobei die Vermittlungsbrücken ausgelegt sind, mit Hilfe der Abonnements Themennamen (441) bei den mit den Vermittlungsbrücken verbundenen Teilnehmer-Nachrichtenvermittlern zu abonnieren, die von den Vermittlungsbrücken weitergeleitet werden sollen, und wobei die Vermittlungsbrücken ausgelegt sind, mit Hilfe der Übersetzungstabellen die Themennamen (441) bei der Übermittlung zu verändern.

9. Automatisierungssystem (800) nach einem der Ansprüche 1 bis 8, wobei der Nachrichtenvermittler (801) einen Themenbaum (400) besitzt, bei dem zwischen Themennamen (441) unterschieden ist, die einen Zustellweg enthalten und solche, die keinen Zustellweg enthalten.

10. Automatisierungssystem (800) nach Anspruch 9, wobei der Zustellweg jeweils Teil des Themennamens (441) ist.

11. Automatisierungssystem (800) nach Anspruch 9 oder 10, wobei im Themenbaum (400) Verfügbarkeitsmeldungen (700) gekennzeichnet sind.

## Claims

1. An automation system (800) having a communication infrastructure which comprises a plurality of communication subscribers which are each connected to at least one message broker (801) via a communication link,
wherein the communication subscribers are embodied to publish messages under topic names (441) or to subscribe to messages under topic names (441) with the message broker (801),
wherein the communication subscribers have a subscription to availability messages (700) with the message broker (801), said messages indicating that a communication subscriber is providing a service,
**characterized in that**
the availability messages (700) each comprise a first return route description (720) which, during transmission between the communication subscribers via the communication links to the message broker (801), is extended in each case with a route section designation for the route sections covered,
wherein an interaction takes place between the communication subscribers in which at least a first communication subscriber (806) which has subscribed to messages under a first topic name (702) with the message broker (801) publishes an availability message (700) under the first topic name (702) with the message broker (801), indicating that the first communication subscriber (806) is providing a service associated with the first topic name (702),
wherein each further communication subscriber receives a message copy of the availability message (700) with a first return route description (720), which comprises the route section designations for the route sections traveled starting from the first communication subscriber (806),
in which at least one second communication subscriber (807) publishes a request message (740) for the service under the first topic name (702) with the message broker (801), the second communication subscriber (807) using the first return route description (703) of the message copy of the availability message (700) of the service as the delivery route in the request message (700) to the first communication subscriber (809), the delivery route of the request message (740) being reduced by the route section designation of the route section traveled in each case during transmission from the second communication subscriber (807) to the first communication subscriber (806) via the communication links to the message broker (801).

2. The automation system (800) according to claim 1,
wherein the second communication subscriber (807) has subscribed to messages under a second topic name with the message broker (801),
wherein the request message (740) comprises a second return route description (730), which is extended by the route section designation of the route section traveled in each case during transmission from the second communication subscriber (807) to the first communication subscriber (806) via the communication links to the message broker (801), and
wherein the first communication subscriber (806) publishes a response message (780) from the service to the request message (740) under the second topic name (702) with the message broker (801),
wherein the first communication subscriber (806) uses the second return route description (730) of the request message (740) as the delivery route in the response message (780) to the second communication subscriber (807), wherein the delivery route of the response message (740) is reduced by the route section designation of the traveled route section during transmission from the first communication subscriber (806) to the second communication subscriber (807) via the communication links to the message broker (801).

3. The automation system (800) according to claim 1 or 2,
wherein the availability message (700) comprises first metadata (701) and a first message content (710),
wherein the first metadata (701) comprises the first topic name (702), the first return route description (720) and a unique value (704), and
wherein the first message content (710) comprises a service type (711) and optionally a service version (713).

4. The automation system (800) according to any one of claims 1 to 3, wherein each communication subscriber comprises a subscriber message broker connected to the message broker (801) via the associated communication link,
wherein each subscriber message broker is associated with a broker designation that uniquely identifies the subscriber message broker with respect to the further subscriber message brokers connected to the message broker (801).

5. The automation system (800) according to claim 4,
wherein the communication subscriber comprises a service and/or an application, each of which is connected to the subscriber message broker of the communication subscriber via a communication link, wherein the service and/or the application are embodied to publish messages under topic names (441) or to subscribe to messages under topic names (441) at the subscriber message broker of the communication subscriber.

6. The automation system (800) according to claim 5,
wherein in the communication subscriber each service is assigned a service designation and each application is assigned an application designation, which uniquely designate the service or the application in the communication subscriber.

7. The automation system (800) according to any one of claims 1 to 6, wherein the communication links of the communication subscribers to the message broker (801) are each switching bridges,
wherein each switching bridge is assigned a bridge designation which uniquely identifies the switching bridge with respect to the further switching bridges which are connected to the message broker (801).

8. The automation system (800) according to claim 7, wherein the switching bridges comprise subscriptions and translation tables, wherein the switching bridges are configured to use the subscriptions to subscribe to topic names (441) at the subscriber message brokers connected to the switching bridges to be forwarded by the switching bridges, and wherein the switching bridges are configured to use the translation tables to modify the topic names (441) upon transmission.

9. The automation system (800) according to any one of claims 1 to 8, wherein the message broker (801) comprises a topic tree (400) in which a distinction is made between topic names (441) that contain a delivery route and those that do not contain a delivery route.

10. The automation system (800) according to claim 9, wherein the delivery route is part of the topic name (441) in each case.

11. The automation system (800) according to claim 9 or 10, wherein availability messages (700) are identified in the topic tree (400).

## Revendications

1. Système d'automatisation (800) doté d'une infrastructure de communication qui possède plusieurs nœuds de communication, lesquels sont respectivement connectés à au moins un agent de transfert de messages (801) par l'intermédiaire d'une connexion de communication,
les nœuds de communication étant conçus pour publier des messages sous des noms de sujet (441) ou pour s'abonner à des messages sous des noms de sujet (441) auprès de l'agent de transfert de messages (801),
les nœuds de communication possédant un abonnement à des messages de disponibilité (700) auprès de l'agent de transfert de messages (801), lesquels indiquent qu'un nœud de communication fournit un service,
**caractérisé en ce que**
les messages de disponibilité (700) présentent respectivement une première description de chemin de retour (720) qui, lors de la transmission entre les nœuds de communication par le biais des connexions de communication vers l'agent de transfert de messages (801), est à chaque fois étendue d'une désignation de portion de chemin pour les portions de chemin parcourues, une interaction ayant lieu entre les nœuds de communication,
dans laquelle au moins un premier nœud de communication (806), qui s'est abonné à des messages sous un premier nom de sujet (702) auprès de l'agent de transfert de messages (801), publie un message de disponibilité (700) sous le premier nom de sujet (702) auprès de l'agent de transfert de messages (801), lequel indique que le premier nœud de communication (806) fournit un service associé au premier nom de sujet (702),
chaque nœud de communication supplémentaire recevant une copie de message du message de disponibilité (700) avec une première description de chemin de retour (720), qui comprend les désignations de portion de chemin pour les portions de chemin parcourues à partir du premier nœud de communication (806),
dans laquelle au moins un deuxième nœud de communication (807) publie un message de demande (740) pour le service sous le premier nom de sujet (702) auprès de l'agent de transfert de messages (801), le deuxième nœud de communication (807) utilisant la première description de chemin de retour (703) de la copie de message du message de disponibilité (700) du service comme chemin de distribution dans le message de demande (700) au premier nœud de communication (809), le chemin de distribution du message de demande (740) lors de la transmission du deuxième nœud de communication (807) au premier nœud de communication (806) par le biais des connexions de communication vers l'agent de transfert de messages (801) étant à chaque fois réduit de la désignation de portion de chemin de la portion de chemin parcourue.

2. Système d'automatisation (800) selon la revendication 1,
le deuxième nœud de communication (807) s'étant abonné à des messages sous un deuxième nom de sujet auprès de l'agent de transfert de messages (801),
le message de demande (740) possédant une deuxième description de chemin de retour (730) qui, lors de la transmission du deuxième nœud de communication (807) au premier nœud de communication (806) par le biais des connexions de communication vers l'agent de transfert de messages (801), est à chaque fois étendue de la désignation de portion de chemin de la portion de chemin parcourue, et
le premier nœud de communication (806) publiant un message de réponse (780) du service au message de demande (740) sous le deuxième nom de sujet (702) auprès de l'agent de transfert de messages (801),
le premier nœud de communication (806) utilisant la deuxième description de chemin de retour (730) du message de demande (740) comme chemin de distribution dans le message de réponse (780) au deuxième nœud de communication (807), le chemin de distribution du message de réponse (740) lors de la transmission du premier nœud de communication (806) au deuxième nœud de communication (807) par le biais des connexions de communication vers l'agent de transfert de messages (801) étant à chaque fois réduit de la désignation de portion de chemin de la portion de chemin parcourue.

3. Système d'automatisation (800) selon la revendication 1 ou 2,
le message de disponibilité (700) possédant des premières métadonnées (701) et un premier contenu de message (710), les premières métadonnées (701) comprenant le premier nom de sujet (702), la première description de chemin de retour (720) et une valeur unique (704), et
le premier contenu de message (710) comprenant un type de service (711) et facultativement une version de service (713).

4. Système d'automatisation (800) selon l'une des revendications 1 à 3, chaque nœud de communication comprenant un agent de transfert de messages de nœud qui est connecté à l'agent de transfert de messages (801) par l'intermédiaire de la connexion de communication associée,
chaque agent de transfert de messages de nœud se voyant attribuer une désignation d'agent de transfert qui identifie de manière univoque l'agent de transfert de messages de nœud par rapport aux agents de transfert de messages de nœud supplémentaires qui sont connectés à l'agent de transfert de messages (801).

5. Système d'automatisation (800) selon la revendication 4,
le nœud de communication comprenant un service et/ou une application qui sont respectivement connectés à l'agent de transfert de messages de nœud du nœud de communication par l'intermédiaire d'une connexion de communication, le service et/ou l'application étant conçus pour publier des messages sous des noms de sujet (441) ou pour s'abonner à des messages sous des noms de sujet (441) auprès de l'agent de transfert de messages de nœud du nœud de communication.

6. Système d'automatisation (800) selon la revendication 5,
dans le nœud de communication, chaque service se voyant attribuer une désignation de service et chaque application une désignation d'application, qui identifient de manière univoque le service ou l'application dans le nœud de communication.

7. Système d'automatisation (800) selon l'une des revendications 1 à 6, les connexions de communication des nœuds de communication avec l'agent de transfert de messages (801) étant respectivement des ponts de commutation,
chaque pont de commutation se voyant attribuer une désignation de pont, qui caractérise de manière univoque le pont de commutation par rapport aux ponts de commutation supplémentaires qui sont connectés à l'agent de transfert de messages (801).

8. Système d'automatisation (800) selon la revendication 7, les ponts de commutation possédant des abonnements et des tables de traduction, les ponts de commutation étant conçus pour, à l'aide des abonnements, s'abonner à des noms de sujet (441) auprès des agents de transfert de messages de nœud connectés aux ponts de commutation, qui sont destinés à être retransmis par les ponts de commutation, et les ponts de commutation étant conçus pour modifier les noms de sujet (441) lors de la transmission à l'aide des tables de traduction.

9. Système d'automatisation (800) selon l'une des revendications 1 à 8, l'agent de transfert de messages (801) possédant un arbre de sujets (400) avec lequel une distinction est faite entre les noms de sujet (441) qui contiennent un chemin de distribution et ceux qui ne contiennent pas de chemin de distribution.

10. Système d'automatisation (800) selon la revendication 9, le chemin de distribution étant respectivement une partie du nom de sujet (441).

11. Système d'automatisation (800) selon la revendication 9 ou 10, des messages de disponibilité (700) étant caractérisés dans l'arbre de sujets (400).
